(19) Europäisches Patentamt / European Patent Office / Office européen des brevets

(11) **EP 3 998 155 B1**

(12) **EUROPEAN PATENT SPECIFICATION**

(45) Date of publication and mention of the grant of the patent:
**27.03.2024 Bulletin 2024/13**

(21) Application number: **20836861.3**

(22) Date of filing: **10.07.2020**

(51) International Patent Classification (IPC):
**B32B 5/32** *(2006.01)*  **B32B 27/20** *(2006.01)*
**B32B 27/32** *(2006.01)*  **H01M 10/052** *(2010.01)*
**H01M 10/0583** *(2010.01)*  **B32B 3/26** *(2006.01)*

(52) Cooperative Patent Classification (CPC):
**H01M 10/4235; B32B 3/266; B32B 27/20; B32B 27/32; H01M 50/417; H01M 50/434; H01M 50/443; H01M 50/446; H01M 50/451; H01M 50/491;** B32B 2250/40; B32B 2307/72; B32B 2307/724; B32B 2307/732; B32B 2457/10;

(Cont.)

(86) International application number:
**PCT/JP2020/027149**

(87) International publication number:
**WO 2021/006357 (14.01.2021 Gazette 2021/02)**

(54) **MULTILAYER POROUS MEMBRANE**

MEHRSCHICHTIGE PORÖSE MEMBRAN

MEMBRANE POREUSE MULTICOUCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.07.2019 JP 2019128750**

(43) Date of publication of application:
**18.05.2022 Bulletin 2022/20**

(60) Divisional application:
**23174460.8 / 4 272 950**

(73) Proprietor: **Asahi Kasei Kabushiki Kaisha**
**Tokyo 1000006 (JP)**

(72) Inventors:
• **UCHIDA, Yuki**
  **Tokyo 100-0006 (JP)**
• **MACHIDA, Naoki**
  **Tokyo 100-0006 (JP)**
• **HOSOKIBARA, Atsushi**
  **Tokyo 100-0006 (JP)**
• **KAWAGUCHI, Ryoma**
  **Tokyo 100-0006 (JP)**
• **KATAGIRI, Takeshi**
  **Tokyo 100-0006 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
EP-A1- 2 408 043    EP-A1- 2 580 270
WO-A1-2018/079474   JP-A- 2009 518 809
JP-A- 2010 092 881   JP-A- 2014 508 662
JP-A- 2016 139 490   JP-A- 2016 139 490
JP-A- 2018 195 564   JP-A- 2019 072 901

(52) Cooperative Patent Classification (CPC): (Cont.)
H01M 10/0525; Y02E 60/10

**Description**

FIELD

The present invention relates to a multilayer porous membrane, and more specifically it relates to a multilayer porous membrane that can be suitably used as a separator to be disposed between a positive electrode and negative electrode in a battery.

BACKGROUND

In conventional electricity storage devices, a power generating element comprising a separator lying between a positive plate and negative plate is impregnated with an electrolyte solution. Separators are generally required to have ion permeability and to also exhibit safety, including a shutdown function, and therefore separators comprising microporous membranes with polyolefin resins have been used. From the viewpoint of electrical insulating properties during thermal runaway, and heat resistance, strength, power storage device safety and cycle characteristics, multilayer porous membranes that are layers of polyolefin microporous membranes and porous layers containing inorganic particles and binder polymers have also been investigated for use as separators (PTLs 1 to 7).

In PTL 1, kaolin-based particles are used as inorganic particles in a multilayer porous membrane in order to reduce the heat shrinkage factor of the multilayer porous membrane.

In PTL 2, the content ratio of the inorganic particles and binder polymer and the BET specific surface area of the inorganic particles are set to within specified ranges, thereby increasing the dispersibility of the coating solution forming the porous layer or the density of the porous layer, in order to increase the heat resistance of the multilayer porous membrane.

In PTL 3, in a heat-resistant multilayer porous membrane comprising a base material and a heat-resistant layer formed on both sides of the base material, different types and physical properties for the heat-resistant resin and heat-resistant particles in the heat-resistant layer have been investigated with the aim of reducing the heat shrinkage factor without increasing the heat-resistant layer thickness.

PTL 4 proposes a battery separator comprising an inorganic porous layer on at least one side of a polyolefin microporous membrane, for the purpose of providing a nonaqueous electrolyte solution battery with excellent mechanical stability, wherein satisfactory processability, excellent charge-discharge characteristics and high safety are provided by using the battery separator, the heat shrinkage factor of the battery separator at 150C is limited to less than 5.0%, and the tensile strength is 120 MPa or greater.

In PTL 5, a multilayer porous membrane comprising a porous resin layer containing a thermoplastic resin as the main component and a heat-resistant porous layer containing heat-resistant microparticles as the main component, is described as a separator that is able to form a nonaqueous electrolyte solution battery with excellent load characteristics and safety, and the particle size, particle size distribution, mean particle size and aspect ratio of the heat-resistant microparticles are examined.

PTL 6 proposes a special porous structure for a polyolefin microporous membrane that can serve as a base material for a multilayer porous membrane, from the viewpoint of the ionic conductivity of the multilayer porous membrane.

PTL 7, in considering the problem that curling is generated at the edges of separators during battery production and layering proceeds while the curled sections are folded, investigates the relationship between the total thickness of the separator with heat-resistant insulating layers, and the thickness of each of the individual heat-resistant insulating layers formed on both sides of the porous resin base material.

PTL 8 discloses a microporous composite film having a coating layer formed on at least one surface of a microporous polyolefin film, wherein the coating layer simultaneously includes a high thermostable polymer resin and inorganic particles.

PTL 9 discloses a laminated separator including a first polyolefin microporous layer and a second polyolefin microporous layer which is laminated on the first polyolefin microporous layer and which is different from the first polyolefin microporous layer, wherein at least one of the first microporous layer and the second microporous layer includes an inorganic particle having a primary particle size of 1 nm or more and 80 nm or less.

PTL 10 discloses a polyolefin microporous film capable of effectively inhibiting thermal runaway at abnormal temperature rising and capable of providing a high-safety separator, the film having a laminating structure having at least one, respectively of the layer A including polyolefin and the layer B including polyolefin on both sides thereof.

[CITATION LIST]

[PATENT LITERATURE]

[PTL 1] International Patent Publication No. 2010/134585
[PTL 2] International Patent Publication No. 2014/148577
[PTL 3] Japanese Unexamined Patent Publication No. 2015-181110
[PTL 4] Japanese Unexamined Patent Publication No. 2016-139490
[PTL 5] Japanese Unexamined Patent Publication No. 2010-15917
[PTL 6] International Patent Publication No. 2013/147071
[PTL 7] Japanese Unexamined Patent Publication No. 2013-8481
[PTL 8] EP 2 580 270 A1
[PTL 9] EP 2 408 043 A1
[PTL 10] JP 2019 072901 A

SUMMARY

[TECHNICAL PROBLEM]

With increasing use of lithium ion secondary batteries for on-vehicle purposes in recent years it is becoming even more important for safety improvements to be implemented. From the viewpoint of increasing capacitance, increasing energy density, reducing weight and reducing thickness of lithium ion secondary batteries, however, it is becoming difficult to ensure safety above current levels. While smaller thicknesses are being sought for the inorganic porous layers of separators as well, reducing the porous layer thickness below specified values can cause problems by very significantly impairing resistance against heat shrinkage of the separators, and therefore the heat shrinkage-inhibiting functions of the conventional multilayer porous membranes described in PTLs 1 and 2 have been insufficient for the demands of high safety and high capacity for on-vehicle purposes.

In-vehicle batteries are assembled in a stack system with the separators folded in a zig-zag form and the positive electrodes and negative electrodes alternately inserted between the separators, in order to increase capacity while reducing thickness. In a stack system, however, the tensile force on the separators in the battery is lower than in a conventional wound system, and short circuiting has tended to occur when such batteries are subjected to nail penetration testing, with the zig-zag-folded separators tending to contract when the nail temperature increases, resulting in more short circuiting. In addition, separators that are folded in a zig-zag form have the upper sides of the separators alternating along a given direction. When one of the separator sides is pierced with a nail, therefore, the nail hole is less likely to enlarge, and this is thought to be more effective in terms of safety.

In light of this situation, it is an object of the present invention to provide a multilayer porous membrane with superior cell characteristics and safety over conventional multilayer porous membranes when incorporated into a power storage device.

[SOLUTION TO PROBLEM]

As a result of much diligent research directed toward solving the problems mentioned above, the present inventors have completed this invention after finding that the aforementioned problems can be solved in a multilayer porous membrane comprising porous layers containing inorganic particles and a binder polymer layered on a porous membrane, by specifying the pore structure of the porous layer and/or by specifying the side of the multilayer porous membrane through which the soldering iron is pierced in a 400°C solder test, as well as the open hole area. Specifically, the invention is defined in the appended claims.

[ADVANTAGEOUS EFFECTS OF INVENTION]

According to the invention it is possible to provide a highly safe multilayer porous membrane, and to use it to provide a power storage device with excellent safety, and especially safety in a nail penetration test, while maintaining the battery characteristics.

BRIEF DESCRIPTION OF DRAWINGS

Fig. 1 is an example of a BIB-processed cross-sectional SEM image for the porous layer of the Embodiment 1.

Fig. 2 is an example showing an area of the porous layer of Embodiment 1 selected for binarization.

Fig. 3 is an example showing the visual field area U in the area of the porous layer of Embodiment 1 selected in Fig. 2.

Fig. 4 is an example of an image of the porous layer of Embodiment 1 after Gaussian Blur processing.

Fig. 5 is an example showing a brightness histogram for the image of Fig. 4 for the porous layer of Embodiment 1, and the method of calculating the threshold during binarization.

Fig. 6 is an example showing an image after binarization, for the porous layer of Embodiment 1.

Fig. 7 is a schematic diagram showing the shape of a soldering iron used in a 400°C solder test for an embodiment.

Fig. 8 is a photograph showing the outer appearance of the stage used in a 400°C solder test for the embodiment.

Fig. 9 is a schematic diagram showing the state of a soldering iron before piercing a multilayer porous membrane, in a 400°C solder test for the embodiment.

Fig. 10 is a schematic diagram showing the state of a soldering iron after piercing a multilayer porous membrane, in a 400°C solder test for the embodiment.

Fig. 11 is a schematic diagram illustrating an impact test.

DESCRIPTION OF EMBODIMENTS

Embodiments for carrying out the invention (hereunder referred to as "embodiments") will now be explained in detail as examples, with the understanding that the invention is not limited to the embodiments. The upper limits and lower limits for the numerical ranges throughout the present specification may be combined as desired. That a member contains a specific component as a main component means that the content of the specific component is 50 weight% or greater based on the weight of the member. Unless otherwise specified, the physical properties and numerical values described herein are those measured or calculated by the methods described in the Examples.

[Embodiment 1]

<Multilayer porous membrane>

The multilayer porous membrane of embodiment 1 is a multilayer porous membrane comprising a porous membrane that contains a polyolefin resin as a main component (PO microporous membrane), and a porous layer that includes inorganic particles and a binder polymer, layered on at least one side of the PO microporous membrane. By having the porous layer pore structure described below, the multilayer porous membrane of embodiment 1 has excellent ability to prevent heat shrinkage even with a smaller total thickness, while also maintaining its ion permeability.

<Porous layer>

In the porous layer of embodiment 1, the total thickness of the porous layer is 0.5 $\mu$m or more and 3.0 $\mu$m or less, the number of holes S per 10 $\mu$m$^2$ visual field among the holes in the porous layer with hole areas of 0.001 $\mu$m$^2$ or greater is 65 or more and 180 or less, the percentage T of the number of holes with hole areas in the range of 0.001 $\mu$m$^2$ to 0.05 $\mu$m$^2$ is 90% or greater with respect to the total number of holes in the porous layer with areas of 0.001 $\mu$m$^2$ or greater, and an aspect ratio of the inorganic particles is 1.0 or more and 3.0 or less.
The number of holes S and the percentage T can be calculated by binarizing a cross-sectional SEM image obtained by observing a cross-section of the porous layer at a photograph magnification of 30,000x using a scanning electron microscope (SEM).

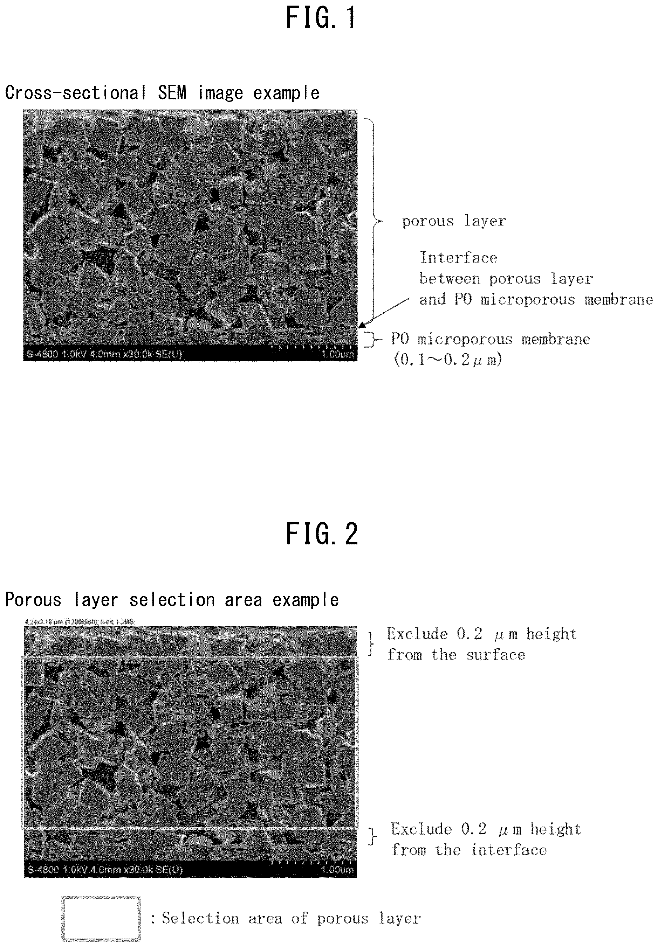

The number of holes S per 10 $\mu m^2$ visual field and the percentage T of the number of holes of 0.001 $\mu m^2$ to 0.05 $\mu m^2$ with respect to the total number of holes can be determined, specifically, by calculation using the method described below in the Examples, with reference to Figs. 1 to 6.

The porous layer of embodiment 1 having the pore structure described above exhibits excellent ability to prevent heat shrinkage even with small thicknesses, while maintaining high ion permeability. It can therefore be used to produce a nonaqueous electrolyte solution secondary battery with high safety performance.

The total thickness of the porous layer is 0.5 $\mu m$ or more and 3.0 $\mu m$ or less, more preferably 0.6 $\mu m$ or more and 2.5 $\mu m$ or less, even more preferably 0.7 $\mu m$ or more and 2.0 $\mu m$ or less and most preferably 1.0 $\mu m$ or more and 1.5 $\mu m$ or less. The total thickness of the porous layer is the thickness of the porous layer when the porous layer is layered on one side of the PO microporous membrane, or it is the total thickness of the porous layers when porous layers have been layered on both sides of the PO microporous membrane. The total thickness of the porous layer is 0.5 $\mu m$ or more from the viewpoint of inhibiting deformation at temperatures higher than the melting point of the porous membrane, and the total thickness of the porous layer is 3.0 $\mu m$ or less from the viewpoint of increasing the battery capacity and inhibiting moisture adsorption on the multilayer porous membrane.

The number of holes S in a 10 $\mu m^2$ visual field is 65 or more and 180 or less, more preferably 70 to 170, even more preferably 75 to 160 and most preferably 80 to 150.

The percentage T of the number of holes with hole areas of 0.001 $\mu m^2$ to 0.05 $\mu m^2$ with respect to the total number of holes X is 90% or greater, more preferably 91% or greater, 92% or greater, 93% or greater, 94% or greater or 95% or greater, and even more preferably 96% or greater, 97% or greater, 98% or greater or 99% or greater, and it may even be 100% theoretically.

The , number of holes S is 65 or more and the percentage T of the number of holes with hole areas of 0.001 $\mu m^2$ to 0.05 $\mu m^2$ with respect to the total number of holes X is 90% or greater, from the viewpoint of inhibiting deformation at temperatures above the melting point of the PO microporous membrane. , The number of holes S is 180 or less and the percentage T is 90%, from the viewpoint of inhibiting deterioration of the battery capacity with repeated battery cycles.

The pore structure is not particularly restricted, and for example, it can be controlled by the form of the inorganic particles used, the percentage of the porous layer occupied by the inorganic particles, any one or more from among the mean particle sizes $D_{50}$, $D_{10}$ and $D_{90}$ of the inorganic particles, the amount of dispersing agent added, the specific surface area of the inorganic particles, the viscosity of the coating solution comprising the inorganic particles and binder polymer, and the layer density of the porous layer. For example, reducing the particle size of the inorganic particles will tend to increase the number of holes in the porous layer. Increasing the viscosity of the coating solution will tend to reduce the percentage T of the number of holes with hole areas of 0.001 $\mu m^2$ to 0.05 $\mu m^2$ with respect to the total number of holes X.

The inorganic particles used for the porous layer are not particularly restricted, but preferably they have high heat resistance and electrical insulating properties, and are also electrochemically stable in the range in which the lithium ion secondary battery is to be used.

Examples of materials for the inorganic particles include oxide-based ceramics such as alumina, silica, titania, zirconia, magnesia, ceria, yttria, zinc oxide and iron oxide; nitride-based ceramics such as silicon nitride, titanium nitride and boron nitride; ceramics such as silicon carbide, calcium carbonate, magnesium sulfate, aluminum sulfate, barium sulfate, aluminum hydroxide, aluminum hydroxide oxide or boehmite, potassium titanate, talc, kaolinite, dickite, nacrite, halloysite, pyrophyllite, montmorillonite, sericite, mica, amesite, bentonite, asbestos, zeolite, calcium silicate, magnesium silicate, diatomaceous earth and quartz sand; and glass fibers. Of these, one or more selected from the group consisting of alumina, boehmite and barium sulfate are preferred from the viewpoint of stability in the lithium ion secondary battery. Synthetic boehmite is even more preferred as boehmite, because it can reduce ionic impurities that may adversely affect the properties of electrochemical elements. The inorganic particles may be used alone, or more than one type may be used together.

Examples of inorganic particle forms include laminar, scaly, polyhedral, needle-like, columnar, granular, spherical, fusiform and block-shaped forms, and various combinations of inorganic particles with these forms may also be used. Preferred among these are block-shaped forms from the viewpoint of balance between permeability and heat resistance.

The aspect ratio of the inorganic particles is 1.0 or more and 3.0 or less and more preferably 1.1 or more and 2.5 or less. The aspect ratio is 3.0 or less from the viewpoint of inhibiting moisture adsorption on the multilayer porous membrane and preventing capacity deterioration with repeated cycling, and also from the viewpoint of inhibiting deformation at temperatures above the melting point of the PO microporous membrane.

The specific surface area of the inorganic particles is preferably 5.5 $m^2/g$ or more and 17 $m^2/g$ or less, more preferably 6.0 $m^2/g$ to 15 $m^2/g$ and even more preferably 6.5 $m^2/g$ to 13 $m^2/g$. The specific surface area is preferably 17 $m^2/g$ or lower from the viewpoint of inhibiting moisture adsorption on the multilayer porous membrane and preventing capacity deterioration with repeated cycling, and the specific surface area is preferably 5.5 $m^2/g$ or higher from the viewpoint of inhibiting deformation at temperatures above the melting point of the PO microporous membrane. The specific surface area of the inorganic particles is measured using the BET adsorption method.

In the particle size distribution of a slurry containing the inorganic particles, the mean particle size $D_{50}$ of the inorganic particles is preferably 0.10 $\mu$m or greater 0.60 $\mu$m or lower, more preferably 0.20 $\mu$m to 0.50 $\mu$m and even more preferably 0.25 $\mu$m to 0.45 $\mu$m. The $D_{50}$ is preferably 0.10 $\mu$m or greater from the viewpoint of inhibiting moisture adsorption on the multilayer porous membrane and preventing capacity deterioration with repeated cycling, and the $D_{50}$ is preferably 0.60 $\mu$m or lower from the viewpoint of inhibiting deformation at temperatures above the melting point of the PO microporous membrane.

In the particle size distribution of a slurry containing the inorganic particles, the mean particle size $D_{90}$ of the inorganic particles is preferably 0.30 $\mu$m to 1.20 $\mu$m, more preferably 0.40 $\mu$m to 1.10 $\mu$m and even more preferably 0.50 $\mu$m to 1.00 $\mu$m. The $D_{90}$ is preferably 0.30 $\mu$m or greater from the viewpoint of inhibiting moisture adsorption on the multilayer porous membrane and preventing capacity deterioration with repeated cycling, and the $D_{90}$ is preferably 1.20 $\mu$m or lower from the viewpoint of inhibiting deformation at temperatures above the melting point of the PO microporous membrane.

In the particle size distribution of a slurry containing the inorganic particles, the mean particle size $D_{10}$ of the inorganic particles is preferably 0.08 $\mu$m to 0.50 $\mu$m, more preferably 0.09 $\mu$m to 0.45 $\mu$m and even more preferably 0.10 $\mu$m to 0.35 $\mu$m. The $D_{10}$ is preferably 0.08 $\mu$m or greater from the viewpoint of inhibiting moisture adsorption on the multilayer porous membrane and preventing capacity deterioration with repeated cycling, and the $D_{10}$ is preferably 0.50 $\mu$m or lower from the viewpoint of inhibiting deformation at temperatures above the melting point of the PO microporous membrane.

The method of adjusting the particle size distribution of the inorganic particles as described above may be, for example, a method of pulverizing the inorganic particles using a ball mill, bead mill or jet mill to obtain the desired particle size distribution, or a method of preparing multiple fillers with different particle size distributions and then blending them.

The percentage of the porous layer occupied by the inorganic particles is 90 weight% or greater and 99 weight% or lower, more preferably 91 weight% to 98 weight% and even more preferably 92 weight% to 98 weight%. A lower occupying percentage of inorganic particles will tend to result in more organic compounds such as the binder polymer, thus increasing the number of holes S, while the occupying percentage of inorganic particles is 90 weight% or greater from the viewpoint of ion permeability and from the viewpoint of inhibiting deformation at temperatures above the melting point of the PO microporous membrane. The percentage is also 99 weight% or lower from the viewpoint of maintaining binding force between the inorganic particles and interfacial binding force between the inorganic particles and PO microporous membrane.

The binder polymer is a material that binds together numerous inorganic particles in the porous layer and also binds together the porous layer and the PO microporous membrane. As the type of binder polymer it is preferred to use one that is insoluble in the electrolyte solution of the lithium ion secondary battery and electrochemically stable in the operating range of the lithium ion secondary battery, when the multilayer porous membrane is used as a separator.

Specific examples of binder polymers include the following 1) to 7).

1) Polyolefins: Polyethylene, polypropylene, ethylene-propylene rubber and modified forms of these;

2) Conjugated diene-based polymers: For example, styrene-butadiene copolymers and their hydrogenated forms, acrylonitrile-butadiene copolymers and their hydrogenated forms and acrylonitrile-butadiene-styrene copolymers and their hydrogenated forms;

3) Acrylic-based polymers: For example, methacrylic acid ester-acrylic acid ester copolymers, styrene-acrylic acid ester copolymers and acrylonitrile-acrylic acid ester copolymers;

4) Polyvinyl alcohol-based resins: For example, polyvinyl alcohol and polyvinyl acetate;

5) Fluorine-containing resins: For example, polyvinylidene fluoride, polytetrafluoroethylene, vinylidene fluoride-hexafluoropropylene-tetrafluoroethylene copolymer and ethylene-tetrafluoroethylene copolymer;

6) Cellulose derivatives: For example, ethyl cellulose, methyl cellulose, hydroxyethyl cellulose and carboxymethyl cellulose; and

7) Polymers that are resins with a melting point and/or glass transition temperature of 180°C or higher, or without a melting point but having a decomposition temperature of 200°C or higher: For example, polyphenylene ethers, polysulfones, polyethersulfones, polyphenylene sulfides, polyetherimides, polyamideimides, polyamides and polyesters.

Preferred from the viewpoint of further improving the safety during short circuiting are 3) acrylic-based polymers, 5) fluorine-containing resins and 7) polyamide polymers. Polyamides are preferably total aromatic polyamides, and especially polymetaphenylene isophthalamide, from the viewpoint of durability.

From the viewpoint of compatibility between the binder polymer and the electrodes, the 2) conjugated diene-based polymers are preferred, while from the viewpoint of voltage endurance, the 3) acrylic-based polymers and 5) fluorine-containing resins are preferred.

2) A conjugated diene-based polymer is a polymer that includes a conjugated diene compound as a monomer unit.

Examples of conjugated diene compounds include 1,3-butadiene, 2-methyl-1,3-butadiene, 2,3-dimethyl-1,3-butadiene, 2-chlor-1,3-butadiene, substituted straight-chain conjugated pentadienes and substituted or side chain-conjugated hexadienes, any of which may be used alone or in combinations of two or more. A particularly preferred compound is 1,3-butadiene.

The 3) acrylic-based polymer is a polymer that includes a (meth)acrylic-based compound as a monomer unit. A (meth)acrylic-based compound is at least one compound selected from the group consisting of (meth)acrylic acid and (meth)acrylic acid esters.

A (meth)acrylic acid used as the 3) acrylic-based polymer may be acrylic acid or methacrylic acid, for example.

Examples of (meth)acrylic acid esters to be used as the 3) acrylic-based polymer include (meth)acrylic acid alkyl esters such as methyl acrylate, methyl methacrylate, ethyl acrylate, ethyl methacrylate, butyl acrylate, butyl methacrylate, 2-ethylhexyl acrylate and 2-ethylhexyl methacrylate; and epoxy group-containing (meth)acrylic acid esters such as glycidyl acrylate and glycidyl methacrylate; any of which may be used alone or in combinations of two or more. Particularly preferred among these are 2-ethylhexyl acrylate (EHA) and butyl acrylate (BA).

An acrylic-based polymer is preferably a polymer including EHA or BA as a main structural unit, from the viewpoint of safety in impact testing. A "main structural unit" is a portion of the polymer corresponding to a monomer constituting at least 40 mol% of the entire starting material used to form the polymer.

The 2) conjugated diene-based polymer and 3) acrylic-based polymer may also be obtained by copolymerization with other monomers that are copolymerizable with them. Examples of other copolymerizable monomers to be used include unsaturated carboxylic acid alkyl esters, aromatic vinyl-based monomers, vinyl cyanide-based monomers, unsaturated monomers with hydroxyalkyl groups, unsaturated amide carboxylate monomers, crotonic acid, maleic acid, maleic acid anhydride, fumaric acid and itaconic acid, any of which may be used alone or in combinations of two or more. Unsaturated carboxylic acid alkyl ester monomers are particularly preferred among these. Unsaturated carboxylic acid alkyl ester monomers include dimethyl fumarate, diethyl fumarate, dimethyl maleate, diethyl maleate, dimethyl itaconate, monomethyl fumarate and monoethyl fumarate, any of which may be used alone or in combinations of two or more.

The 2) conjugated diene-based polymer can be obtained by copolymerization of the aforementioned (meth)acrylic-based compound as another monomer.

From the viewpoint of exhibiting high binding force between inorganic particles even at high temperatures above ordinary temperature, and inhibiting heat shrinkage, the binder polymer is preferably in the form of a latex, and is more preferably an acrylic-based polymer latex.

A dispersing agent such as a surfactant may also be added to the coating solution to improve the dispersion stability and coatability. The dispersing agent is adsorbed onto the surfaces of the inorganic particles in the slurry, thus stabilizing the inorganic particles by electrostatic repulsion or other force, and examples thereof include polycarboxylic acid salts, sulfonic acid salts and polyoxyethers. The amount of dispersing agent added is preferably 0.2 parts by weight to 5.0 parts by weight and more preferably 0.3 parts by weight to 1.0 parts by weight, based on solid content.

The viscosity of the coating solution is preferably 10 mPa·sec to 200 mPa·sec, as measured using a Brookfield viscometer (at 60 rpm). It is more preferably 40 mPa·sec to 150 mPa·sec and even more preferably 50 mPa·sec to 130 mPa·sec. It is preferably 10 mPa·sec or higher from the viewpoint of inhibiting deposition of the inorganic particles in the coating solution, and it is preferably 200 mPa·sec or lower from the viewpoint of stabilizing the dispersion in the coating solution and of inhibiting porous layer surface patterns after the coating solution has been applied onto the PO microporous membrane.

The layer density in the porous layer is preferably 1.10 g/(m$^2$·$\mu$m) to 3.00 g/(m$^2$·$\mu$m), more preferably 1.20 g/(m$^2$·$\mu$m) to 2.90 g/(m$^2$·$\mu$m), even more preferably 1.40 g/(m$^2$·$\mu$m) to 2.70 g/(m$^2$·$\mu$m) and most preferably 1.50 g/(m$^2$·$\mu$m) to 2.50 g/(m$^2$·$\mu$m). The layer density in the porous layer is preferably 1.10 g/(m$^2$·$\mu$m) or greater from the viewpoint of inhibiting deformation at temperatures above the melting point of the PO microporous membrane, and it is preferably 3.00 g/(m$^2$·$\mu$m) or lower from the viewpoint of preventing capacity deterioration with repeated cycling, while maintaining the ion permeability of the porous layer.

<Relationship between PO microporous membrane, porous layer and multilayer porous membrane, for embodiment 1>

For embodiment 1, the ratio of the air permeability of the multilayer porous membrane with respect to the air permeability of the PO microporous membrane is preferably 1.0 to 1.6, more preferably 1.5 or lower and even more preferably 1.4 or lower. The ratio of the air permeability of the multilayer porous membrane with respect to the air permeability of the PO microporous membrane is preferably 1.6 or lower from the viewpoint of inhibiting increased clogging after repeated cycling, while maintaining ion permeability, by having the PO microporous membrane surface suitably covered by the porous layer.

The porous layer of embodiment 1 preferably has a porosity of greater than 30% from the viewpoint of the permeability of the multilayer porous membrane and the rate property of the power storage device, the porosity being more preferably 40% or greater and even more preferably 45% or greater. The upper limit for the porosity of the porous layer is preferably lower than 70%, more preferably 60% or lower and even more preferably 55% or lower from the viewpoint of heat resistance.

[Embodiment 2] (not in accordance with the invention as claimed)

<Multilayer porous membrane>

The multilayer porous membrane of embodiment 2 comprises:

a porous membrane that contains a polyolefin resin as the main component (PO microporous membrane),
a first porous layer that includes inorganic particles and a binder polymer, disposed on one side of the PO microporous membrane, and
a second porous layer that includes inorganic particles and a binder polymer, disposed on the other side of the PO microporous membrane. The multilayer porous membrane comprises an inorganic porous layer disposed on both sides of a polyolefin microporous membrane, and it can be used as a power storage device separator in a nonaqueous electrolyte solution battery or lithium ion secondary battery, for example.

<400°C Solder test>

In a 400°C solder test in which the multilayer porous membrane of embodiment 2 is pierced with a soldering iron with a diameter of 1 mm and a temperature of 400°C and held for 3 seconds with the soldering iron in the piercing state, the area of the hole formed in the multilayer porous membrane is 10.0 mm$^2$ or smaller whether the soldering iron has been inserted from the first porous layer side or the second porous layer side.

The "nail penetration test" is known as a safety test for internal short circuiting. The nail penetration test is an internal short circuiting simulation test, which produces internal short circuiting by passing a nail through a lithium ion secondary battery, confirming that thermal runaway does not occur in the battery. In the prior art of this technical field, a smaller open hole area in a separator in a solder test has been assumed to be satisfactorily safe in a battery nail penetration test, but the open hole area has tended to differ depending on the side from which the soldering iron is inserted. More specifically, a battery comprising zig-zag-folded electrodes and separators may have both of the sides of the membranes of the separators as the top regardless of the direction, and it is therefore essential to reduce the area of short circuiting from either insertion side. When the open hole area is large on either side, Joule heat release rapidly accelerates, tending to result in thermal runaway. The present inventors have found that the open hole area, which is measured by a 400°C solder test from both sides of a multilayer porous membrane used as a separator, is useful as an index of the suitable design range for separators in order to obtain improved safety (especially safety in battery nail penetration testing).

From the viewpoint described above, an area of a hole formed in a multilayer porous membrane may be 10.0 mm$^2$ or smaller, preferably 8 mm$^2$ or smaller and more preferably 6 mm$^2$ or smaller in a 400°C solder test, whether the soldering iron is inserted into the multilayer porous membrane from the first porous layer side or the second porous layer side. The lower limit for the open hole area in this case is not particularly restricted, with 0 mm$^2$ or larger being sufficient, but it may exceed 1.0 mm$^2$ since the portion of the area of the soldering iron itself is forcibly destroyed.

The open hole area size is not particularly restricted, and for example, it can be controlled by the form of the inorganic particles used, the percentage of the porous layer occupied by the inorganic particles, the mean particle sizes $D_{50}$ and/or $D_{90}$ of the inorganic particles, the amount of dispersing agent added, the specific surface area of the inorganic particles, the viscosity of the coating solution comprising the inorganic particles and binder polymer, the layer density of the porous layer, and the basis weight-converted strength or maximum shrinkage stress of the porous membrane. For example, the open hole area tends to be smaller if the $D_{90}$ of the inorganic particles is reduced. The open hole area also tends to be smaller if the basis weight-converted strength of the porous membrane is lowered.

In a solder test of the multilayer porous membrane at 400°C, preferably the area ratio of holes formed in the multilayer porous membrane after the soldering iron has been inserted respectively from the first porous layer side and from the second porous layer side is in the range of 0.8 to 1.2. The area ratio in this case may be the ratio of the open hole area on the second porous layer side with respect to the open hole area on the first porous layer side, or the ratio of the open hole area on the first porous layer side with respect to the open hole area on the second porous layer side. While the reason is not fully understood, it is thought that a large area ratio (that is, a greater difference in open hole area on both sides of the multilayer porous membrane when pierced with a soldering iron) results in a temperature difference in the battery during nail penetration testing of the battery, this temperature difference tending to increase flux of the electrolyte solution and further promote secondary reactions. From this viewpoint, if the area ratio of holes formed in the multilayer porous membrane when the soldering iron has been inserted respectively from the first porous layer side and from the second porous layer side is in the range of 0.8 to 1.2, secondary reactions will be less likely to be promoted and the power storage device will therefore have excellent device properties and safety. From the viewpoint of further inhibiting secondary reactions, the area ratio of holes is preferably 0.9 to 1.1 and more preferably 0.9 to 1.0, as the ratio of the open hole area on the second porous layer side with respect to the open hole area on the first porous layer side.

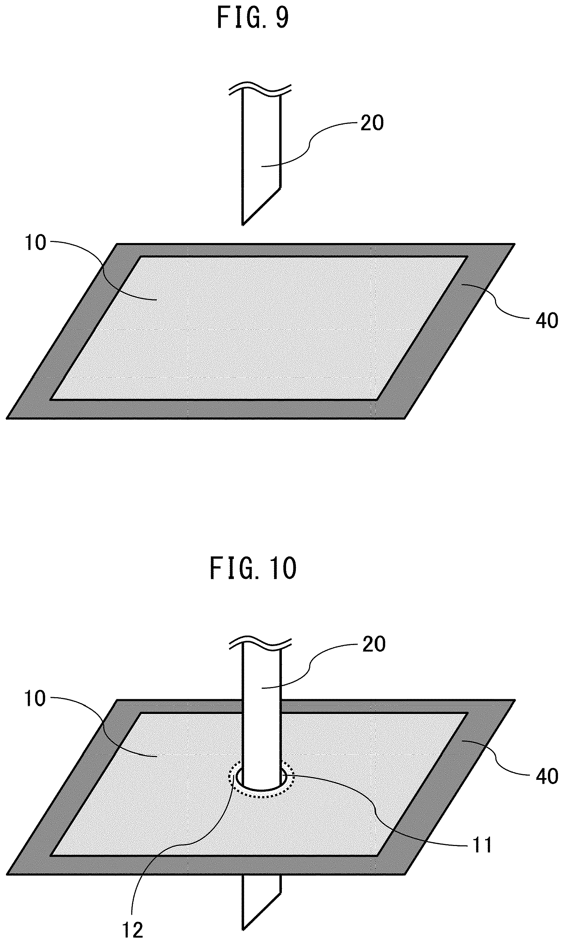

In 400°C solder testing, colored sections sometimes form on the side through which the soldering iron has been inserted, the colored sections being distinct from the hole formed on that side. Fig. 9 shows a schematic diagram of the state of a multilayer porous membrane before it has been pierced with a soldering iron in the 400°C solder testing for embodiment 2, and Fig. 10 shows a schematic diagram of the state after the multilayer porous membrane has been pierced with the soldering iron. In Fig. 10, the multilayer porous membrane (10) has a hole (11) formed by the 400°C solder test, the periphery of the hole having a colored section (12). The hole is a through-hole, formed when the multilayer porous membrane is pierced with the soldering iron (20) and by melting due to heating of the peripheral components of the soldering iron (20). The colored section is the section of the multilayer porous membrane (10) where the hole is not formed, and where heating has caused the structure of the multilayer porous membrane to deform, resulting in coloration. The presence or absence of coloration can be judged by the following image processing method. For example, in embodiment 2 the multilayer porous membrane prior to 400°C solder testing is white due to diffuse reflection of light by the porous section, but heating by the soldering iron causes the components surrounding the hole to melt, thus obstructing the holes in the polyolefin microporous membrane, first porous layer and second porous layer and altering the semi-transparency or transparency. For embodiment 2, the colored section is the part among the non-hole-formed section of the multilayer porous membrane where deformation of the hole by heating has resulted in alteration from white to semi-transparent or transparent.

<Multilayer structure>

The multilayer porous membrane of embodiment 2 has a multilayer structure that includes a first porous layer including inorganic particles and a binder polymer, a polyolefin microporous membrane (PO microporous membrane), and a second porous layer including inorganic particles and a binder polymer, in that order. The multilayer structure is not limited to the three-layer structure of the first porous layer-PO microporous membrane-second porous layer, and for example, one or more additional layers may be formed between the first porous layer and the PO microporous membrane, between the second porous layer and the PO microporous membrane, or outside of the multilayer porous membrane. Examples of additional layers include an additional PO microporous membrane, an additional porous layer including inorganic particles and a binder polymer, a resin layer comprising 50 weight% or greater of a resin other than polyolefin (PO), and an adhesive layer including an adhesive polymer.

<Porous layer>

For embodiment 2, the PO microporous membrane has at least two sides due to its membrane form, with the porous layer disposed on one side of the PO microporous membrane being the first porous layer, and the porous layer disposed on the other side of the PO microporous membrane being the second porous layer. The first porous layer and second porous layer may be the same or different so long as they include inorganic particles and a binder polymer.

The material and form of the inorganic particles used in the porous layer for embodiment 2 may be the material and form described for embodiment 1.

In the particle size distribution of a slurry containing the inorganic particles for embodiment 2, the particle size $D_{50}$ is in the range of preferably 0.05 $\mu$m to 1.2 $\mu$m, more preferably 0.05 $\mu$m to 0.8 $\mu$m and even more preferably 0.05 $\mu$m to 0.5 $\mu$m. If $D_{50}$ is 0.05 $\mu$m or greater then migration of the inorganic particles in the pores of the PO microporous membrane from the porous layer may be inhibited, resulting in satisfactory permeability of the multilayer porous membrane. If $D_{50}$ is 1.2 $\mu$m or lower then the porous layer will tend to exhibit heat resistance.

In the particle size distribution of a slurry containing the inorganic particles composing the first porous layer and second porous layer, the $D_{90}$ of the inorganic particles is preferably 1.5 $\mu$m or lower and more preferably 1.0 $\mu$m or lower, so that destruction of the first and second porous layers does not start from the inorganic particles in the case of small thickness. The lower limit for $D_{90}$ is preferably 0.05 $\mu$m or greater from the viewpoint of inhibiting migration of the inorganic particles from the porous layer into the pores of the PO microporous membrane, and resulting in satisfactory permeability of the multilayer porous membrane.

The method of adjusting the particle size distribution of the inorganic particles for embodiment 2 as described above may be, for example, a method of pulverizing the inorganic particles using a ball mill, bead mill or jet mill to obtain the desired particle size distribution, or a method of preparing multiple fillers with different particle size distributions and then blending them.

The percentage of the porous layer occupied by the inorganic particles for embodiment 2 can be appropriately set from the viewpoint of permeability and heat resistance. The percentage is preferably 50 weight% or greater, more preferably 70 weight% or greater, even more preferably 80 weight% or greater, yet more preferably 90 weight% or greater and most preferably 95 weight% or greater. The percentage is also preferably less than 100 weight%, more preferably 99.9 weight% or lower, even more preferably 99 weight% or lower and most preferably 98 weight% or lower.

The materials and specific examples for the binder polymer described for embodiment 1 may be employed as materials and specific examples for the binder polymer used in the porous layer of embodiment 2.

The coating solution for the porous layer of embodiment 2, and its constituent components, may also be the coating solution and constituent components described for embodiment 1.

For embodiment 2, the layer thickness of the first porous layer and the layer thickness of the second porous layer may be 1.5 $\mu$m or smaller or 1 $\mu$m or smaller, from the viewpoint of heat resistance and balance between the power storage device capacity and cycle characteristic. From the same viewpoint, the layer thicknesses of the first porous layer and second porous layer are preferably in the range of 0.1 $\mu$m to 5 $\mu$m, and more preferably 0.3 $\mu$m to 3 $\mu$m, 0.3 $\mu$m to 1.5 $\mu$m or 0.3 $\mu$m to 1 $\mu$m. When a multilayer porous membrane of the embodiment is used as a separator incorporated into a power storage device, the thickness of the porous layer facing the positive electrode is preferably smaller than the thickness of the porous layer facing the negative electrode, from the viewpoint of both oxidation resistance of the separator and the cycle characteristic of the power storage device.

For embodiment 2, the total layer thickness of the first porous layer and second porous layer (the total porous layer thickness) is preferably 5 $\mu$m or smaller, and more preferably 4.5 $\mu$m or smaller or 4 $\mu$m or smaller, from the viewpoint of both the power storage device capacity and cycle characteristic. The lower limit for the total of the layer thicknesses of the first porous layer and second porous layer is not limited, and may be 0.2 $\mu$m or larger, 0.4 $\mu$m or larger, 0.6 $\mu$m or larger, 1 $\mu$m or larger or 2 $\mu$m or larger, for example. The layer thicknesses of the first porous layer and second porous layer may be controlled by adjusting the coating thickness, for example, when forming the PO microporous membrane by coating of the layers.

For embodiment 2, each porous layer that includes inorganic particles and a binder polymer preferably has a porosity exceeding 30%, from the viewpoint of the permeability of the multilayer porous membrane and the rate property of the power storage device, the porosity being more preferably 40% or greater and even more preferably 45% or greater. The upper limit for the porosity of the porous layer is preferably lower than 70%, more preferably 60% or lower and even more preferably 55% or lower from the viewpoint of heat resistance.

[Embodiment 3]

<Multilayer porous membrane>

Embodiment 3 provides a multilayer porous membrane combining the constructions of embodiment 1 and embodiment 2.

The multilayer porous membrane of embodiment 3 comprises a PO microporous membrane, and first and second porous layers each containing inorganic particles and a binder polymer, disposed on both sides of the PO microporous membrane, wherein the first or second porous layer has a total thickness of 0.5 $\mu$m or more and 3.0 $\mu$m or less, the percentage of each porous layer occupied by the inorganic particles is 90 weight% or more and 99 weight% or less, the aspect ratio of the inorganic particles is 1.0 or more and 3.0 or less, the number of holes S as described for embodiment 1 is 65 or more and 180 or less, the percentage T of the number of holes is 90% or greater, and in 400°C solder testing as described for embodiment 2, the area of holes formed in the multilayer porous membrane is 10.0 mm$^2$ or smaller whether the soldering iron has been inserted from the first porous layer side or the second porous layer side.

The constituent elements common to embodiments 1 to 3, and the preferred constituent elements or other constituent elements are as follows.

<Polyolefin microporous membrane>

The porous membrane comprising a polyolefin as the main component (PO microporous membrane) includes a polyolefin, and is preferably composed of the polyolefin. The form of the polyolefin may be a microporous polyolefin, such as a polyolefin membrane, polyolefin-based fiber fabric (woven fabric) or polyolefin-based fiber nonwoven fabric. Examples of polyolefins include homopolymers, copolymers or multistage polymers obtained using monomers such as ethylene, propylene, 1-butene, 4-methyl-1-pentene, 1-hexene and 1-octene, any of which polymers may be used alone or in blends of two or more. From the viewpoint of melt viscosity, shutdown property and meltdown property of the PO microporous membrane to be used in the separator, the polyolefin is preferably one or more selected from the group consisting of polyethylene, polypropylene and their copolymers, more preferably it includes polypropylene, and even more preferably it is ethylene-propylene copolymer or a blend of polyethylene and polypropylene.

Specific examples of polyethylene include low-density polyethylene (LDPE), linear low-density polyethylene (LLDPE), medium-density polyethylene (MDPE), high-density polyethylene (HDPE), high molecular weight polyethylene (HMWPE) and ultrahigh molecular weight polyethylene (UHMWPE).

Throughout the present specification, high molecular weight polyethylene (HMWPE) is polyethylene having a viscosity-average molecular weight (Mv) of 100,000 or greater. Since the Mv of ultrahigh molecular weight polyethylene (UHMWPE) is generally 1,000,000 or greater, the definition of high molecular weight polyethylene (HMWPE) for the purpose of the present specification includes UHMWPE.

Throughout the present specification, the term "high-density polyethylene" refers to polyethylene having a density of 0.942 to 0.970 g/cm$^3$. The density of polyethylene, for the purpose of the present disclosure, is the value measured according to the D) Density gradient tube method, of JIS K7112(1999).

Specific examples of polypropylene include isotactic polypropylene, syndiotactic polypropylene and atactic polypropylene.

Specific examples of copolymers of ethylene and propylene include ethylene-propylene random copolymers and ethylene-propylene rubber.

When the polyolefin (PO) in the PO microporous membrane includes polyethylene (PE), the PE content is 50 weight% to 100 weight% based on the total weight of the resin component composing the PO microporous membrane, and it is preferably 85 weight% to 100 weight% and more preferably 90 weight% to 95 weight% from the viewpoint of the fuse characteristic or meltdown property.

When the PO in the PO microporous membrane includes polypropylene (PP), the PP content is 0 weight% or greater and less than 50 weight% based on the total weight of the resin component composing the PO microporous membrane, and it is preferably 0 weight% to 20 weight% and more preferably 5 weight% to 10 weight% from the viewpoint of the melt viscosity and fuse characteristic.

In addition to the polyolefin mentioned above, the PO microporous membrane may further include a resin such as polyethylene terephthalate, polycycloolefin, polyethersulfone, polyamide, polyimide, polyimideamide, polyaramid, polyvinylidene fluoride, nylon or polytetrafluoroethylene.

The melt index (MI) of the PO microporous membrane at 190°C is preferably 0.02 g/10 min to 0.5 g/10 min and more preferably 0.05 g/10 min to 0.3 g/10 min, from the viewpoint of limiting the high viscosity of the PO resin composition during film formation to help reduce defective products.

The puncture strength in terms of the basis weight (g/m$^2$) of the PO microporous membrane (hereunder referred to as "basis weight-equivalent puncture strength") is preferably 50 gf/(g/m$^2$) or greater or 60 gf/(g/m$^2$) or greater. A PO microporous membrane having a basis weight-equivalent puncture strength of 50 gf/(g/m$^2$) or greater or 60 gf/(g/m$^2$) or greater will be less likely to result in tearing of the PO microporous membrane during impact testing of the power storage device. From the viewpoint of improving the power storage device safety, such as impact resistance, while maintaining the strength of the PO microporous membrane, the basis weight-equivalent puncture strength is more preferably 70 gf/(g/m$^2$) or greater and even more preferably 80 gf/(g/m$^2$) or greater. The limit for the basis weight-equivalent puncture strength is not particularly restricted and may be 200 gf/(g/m$^2$) or lower, 150 gf/(g/m$^2$) or lower or 140 gf/(g/m$^2$) or lower, for example.

The puncture strength that is not in terms of the basis weight of the PO microporous membrane (hereunder referred to simply as "puncture strength") has a lower limit of preferably 100 gf or greater, more preferably 200 gf or greater, and even more preferably 300 gf or greater. A puncture strength of 100 gf or greater is preferred from the viewpoint of inhibiting tearing of the PO microporous membrane during impact testing. The upper limit for the puncture strength of the PO microporous membrane is preferably 1000 gf or lower, more preferably 800 gf or lower and even more preferably 700 gf or lower from the viewpoint of stability during film formation. The lower limit may be a value that allows stable production during film formation and battery fabrication. The upper limit is set in balance with the other properties. The puncture strength can be increased by increasing the orientation of the molecular chains by application of shearing force or stretching of the molded article during extrusion, but since increasing the strength also impairs the thermostability due to higher residual stress, this is controlled as suitable for the purpose.

From the viewpoint of ensuring voltage endurance, the thickness of the PO microporous membrane is preferably 1 $\mu$m or larger, more preferably 2 $\mu$m or larger and even more preferably 5 $\mu$m or larger, while from the viewpoint of ensuring power storage device capacity it is preferably 25 $\mu$m or smaller, more preferably 20 $\mu$m or smaller, even more preferably 16 $\mu$m or smaller and most preferably 12 $\mu$m or smaller. The film thickness of the PO microporous membrane can be adjusted by controlling the die lip gap or the stretch ratio during the stretching step, for example.

From the viewpoint of permeability, the porosity of the PO microporous membrane is preferably 20% or higher, more preferably 30% or higher and even more preferably 35% or higher, while from the viewpoint of membrane strength it is preferably 70% or lower, more preferably 60% or lower and even more preferably 50% or lower. The porosity of the PO microporous membrane can be adjusted, for example, by controlling the blending ratio of the polyolefin resin composition and the plasticizer, the stretching temperature, the stretch ratio, the heat setting temperature, the stretch ratio during heat setting and the relaxation factor during heat setting, or by controlling any combination of these.

The air permeability of the PO microporous membrane is preferably 10 sec/100 cm$^3$ or greater, more preferably 50 sec/100 cm$^3$ or greater and even more preferably 80 sec/100 cm$^3$ or greater from the viewpoint of avoiding excessive flow of current through the PO microporous membranes between multiple electrodes, while it is also preferably 1000 sec/100 cm$^3$ or lower, more preferably 300 sec/100 cm$^3$ or lower, even more preferably 200 sec/100 cm$^3$ or lower and most preferably 160 sec/100 cm$^3$ from the viewpoint of permeability.

The viscosity-average molecular weight (Mv) of the PO microporous membrane is preferably 400,000 to 1,300,000, more preferably 450,000 to 1,200,000 and even more preferably 500,000 to 1,150,000. If the Mv of the PO microporous membrane is 400,000 or greater, the melt tension during melt molding will be increased, resulting in satisfactory moldability, while higher strength will also tend to be obtained due to entanglement between the polymers. If the Mv is 1,300,000 or lower, uniform melt kneading of the starting materials will be facilitated and the sheet forming properties, and especially the thickness stability, will tend to be superior, while the holes will tend to be obstructed during temperature increase when used as a separator for a power storage device, resulting in a satisfactory fuse function.

The mean pore size of the PO microporous membrane is preferably 0.03 $\mu$m to 0.70 $\mu$m, more preferably 0.04 $\mu$m to 0.20 $\mu$m, even more preferably 0.05 $\mu$m to 0.10 $\mu$m and yet more preferably 0.055 $\mu$m to 0.09 $\mu$m. The mean pore size of the PO microporous membrane is preferably 0.03 $\mu$m to 0.70 $\mu$m from the viewpoint of ionic conductivity and voltage endurance. The mean pore size can be adjusted, for example, by controlling the compositional ratio of the polyolefins, the types of polyolefins or plasticizers, the cooling rate of the extruded sheet, the stretching temperature, the stretch ratio, the heat setting temperature, the stretch ratio during heat setting and the relaxation factor during heat setting, or by controlling any combination of these.

The PO microporous membrane preferably has low electrical conductivity, exhibits ionic conductivity, has high resistance to organic solvents and has fine pore diameters. The PO microporous membrane can be utilized alone as a separator for a lithium ion secondary battery, and in particular it can be suitably used as a separator for a laminated lithium ion secondary battery.

<Other properties of multilayer porous membrane>

In order to ensure voltage endurance, the total thickness of the multilayer porous membranes of embodiments 1 to 3 is preferably greater than 1.5 $\mu$m, more preferably 2.5 $\mu$m or greater and even more preferably 5.5 $\mu$m or greater. The total thickness of the multilayer porous membrane is also preferably smaller than 28 $\mu$m to help prevent impairment of the capacity of the power storage device in which the multilayer porous membrane is mounted, and it is more preferably 23 $\mu$m or smaller, even more preferably 19 $\mu$m or smaller and especially preferably 15 $\mu$m or smaller.

The air permeability of the multilayer porous membrane of embodiment 1 is preferably 50 sec/100 cm$^3$ or greater and more preferably 80 sec/100 cm$^3$ or greater from the viewpoint of ensuring power storage device safety so that current does not flow excessively between the electrodes through the multilayer porous membrane. From the viewpoint of ion permeability, the air permeability of the multilayer porous membrane of embodiment 1 is preferably 250 sec/100 cm$^3$ or lower and more preferably 200 sec/100 cm$^3$ or lower.

The air permeability of the multilayer porous membrane of embodiment 2 or 3 is preferably 10 sec/100 cm$^3$ or greater, more preferably 50 sec/100 cm$^3$ or greater and even more preferably 80 sec/100 cm$^3$ or greater, from the viewpoint of ensuring power storage device safety so that current does not flow excessively between the electrodes through the multilayer porous membrane. From the viewpoint of permeability, the air permeability of the multilayer porous membrane is preferably 1000 sec/100 cm$^3$ or lower, more preferably 300 sec/100 cm$^3$ or lower and even more preferably 250 sec/100 cm$^3$ or lower.

The 130°C heat shrinkage factor of the multilayer porous membrane of embodiment 1 is not particularly restricted, and for example, it is preferably 0.0% to 5.0%, more preferably 0.0% to 3.0% and even more preferably 0.0% to 2.0% in both the MD direction and TD direction. The 130°C heat shrinkage factor is preferably 5.0% or lower in both the MD direction and TD direction from the viewpoint of preventing film rupture of the multilayer porous membrane when battery abnormalities occur, and inhibiting short circuiting.

The 150°C heat shrinkage factor of the multilayer porous membrane of embodiment 1 is not particularly restricted, and for example, it is preferably 0.0% to 5.0% and more preferably 0.0% to 3.0% in both the MD direction and TD direction. The 150°C heat shrinkage factor is preferably 5.0% or lower in both the MD direction and TD direction from the viewpoint of preventing film rupture of the multilayer porous membrane when battery abnormalities occur, and inhibiting short circuiting.

The heat shrinkage factor of the multilayer porous membrane of embodiment 2 or 3 at 150°C is preferably lower than 10.0%, and more preferably 5.0% or lower. The heat shrinkage factor of the multilayer porous membrane of embodiment 2 or 3 is the larger of the MD heat shrinkage factor and TD heat shrinkage factor. The MD is the machine direction during continuous formation of the microporous membrane or multilayer porous membrane, while the TD is the direction crossing at an angle of 90° with the MD. A heat shrinkage factor of lower than 10.0% at 150°C will tend to reduce the area in which short circuiting can occur during nail penetration testing of a power storage device comprising the multilayer porous membrane of embodiment 2 or 3 as the separator. The lower limit for the heat shrinkage factor of the multilayer porous membrane of embodiment 2 or 3 at 150°C is not particularly restricted, and for example, it may be -5.0% or greater, -3.0% or greater, 0.0% or greater, or greater than 0.0%, for example, in both the MD and TD.

The open hole area in 400°C solder testing, the total thickness, the air permeability and the heat shrinkage factor of the multilayer porous membrane of embodiment 2 or 3 can be adjusted by appropriately combining production conditions for the PO microporous membrane and production conditions for the porous layer.

<Method for producing multilayer porous membrane>

The multilayer porous membrane of embodiment 1 can be produced by a known method, and for example, it can be produced by first forming the PO microporous membrane and then disposing the porous layer on at least one side of the PO microporous membrane.

The multilayer porous membrane of embodiment 2 or 3 can be produced by a known method. For example, the multilayer porous membrane of embodiment 2 or 3 can be produced by first forming the PO microporous membrane, and then disposing the first porous layer on one side of the PO microporous membrane and disposing the second porous layer on the other side of the PO microporous membrane. Alternatively, the PO microporous membrane and porous layer may be produced by co-extrusion, or the first porous layer and second porous layer may each be extruded onto both sides of the PO microporous membrane, or the separately produced PO microporous membrane and porous layer may be bonded together.

<Method for producing polyolefin microporous membrane>

The method for producing the polyolefin microporous membrane (PO microporous membrane) is not particularly restricted, and any known production method may be employed. Examples include:

(1) a method of melt kneading a polyolefin resin composition and a pore-forming material and molding the mixture into a sheet, with stretching if necessary, and then extracting the pore-forming material to form pores,
(2) a method of melt kneading a polyolefin resin composition, extruding it at a high draw ratio, and then stretching it with heat treatment to detach the polyolefin crystal interface and form pores,
(3) a method of melt kneading a polyolefin resin composition and an inorganic filler and molding the mixture into a sheet, and then detaching the interface between the polyolefin and the inorganic filler by stretching to form pores, and
(4) a method of first dissolving the polyolefin resin composition, and then dipping it in a poor solvent for the polyolefin to solidify the polyolefin while simultaneously removing the solvent, to form pores.

An example of a method of producing the PO microporous membrane will now be described, as a method of melt kneading a polyolefin resin composition and a pore-forming material, casting the mixture into a sheet, and then extracting the pore-forming material.

First, the polyolefin resin composition and the pore-forming material are melt kneaded. In the melt kneading method, a polyolefin resin and other additives as necessary may be loaded into a resin kneader such as an extruder, feeder, Laboplastomil, kneading roll or Banbury mixer, and the pore-forming material introduced at a desired proportion and kneaded in while hot melting the resin components.

The pore-forming material may be a plasticizer, an inorganic material, or a combination thereof. The plasticizer is not particularly restricted, and may be a non-volatile solvent that can form a homogeneous solution at above the melting point of the polyolefin, such as a hydrocarbon such as liquid paraffin or paraffin wax; an ester such as dioctyl phthalate or dibutyl phthalate; or a higher alcohol such as oleyl alcohol or stearyl alcohol. Liquid paraffins are preferred among these plasticizers because of their high compatibility when the polyolefin resin is polyethylene and/or polypropylene, and low risk of interfacial peeling between the resin and plasticizer even when the melt kneaded mixture is stretched, tending to allow homogeneous stretching. Examples of inorganic materials include oxide-based ceramics such as alumina, silica (silicon oxide), titania, zirconia, magnesia, ceria, yttria, zinc oxide and iron oxide; nitride-based ceramics such as silicon nitride, titanium nitride and boron nitride; ceramics such as silicon carbide, calcium carbonate, aluminum sulfate, aluminum hydroxide, potassium titanate, talc, kaolin clay, kaolinite, halloysite, pyrophyllite, montmorillonite, sericite, mica, amesite, bentonite, asbestos, zeolite, calcium silicate, magnesium silicate, diatomaceous earth and quartz sand; and glass fibers. They may be used alone or optionally as combinations of two or more types. Of these inorganic materials, silica, alumina and titania are preferred from the viewpoint of electrochemical stability, and silica is especially preferred from the viewpoint of easier extraction.

The melt kneaded mixture is then cast into a sheet. The method of producing the cast sheet may be, for example, a method of extruding the melt kneaded mixture through a T-die or the like into a sheet, and contacting it with a heat conductor to cool it to a sufficiently lower temperature than the crystallization temperature of the resin component, thereby solidifying it. The heat conductor used for cooling solidification may be a metal, water, air or a plasticizer. Metal rolls are preferably used for high heat conduction efficiency. When the extruded kneaded blend is to be contacted with metal rolls, it is more preferably sandwiched between the rolls because this will further increase the heat conduction efficiency while causing the sheet to become oriented and increasing the membrane strength, and also tending to improve the surface smoothness of the sheet. The die lip gap when extruding the melt kneaded mixture into a sheet from a T-die is preferably from 200 $\mu$m to 3,000 $\mu$m and more preferably from 500 $\mu$m to 2,500 $\mu$m. Limiting the die lip gap to 200 $\mu$m or greater can reduce tip adhesion, can lower the effects of streaks and defects on the film quality, and can lower the risk of film rupture during the subsequent stretching step. Limiting the die lip gap to 3,000 $\mu$m or smaller, on the other hand, can speed the cooling rate to prevent cooling irregularities while maintaining sheet thickness stability.

The cast sheet may also be subjected to rolling. Rolling may be carried out, for example, by a press method using a double belt press machine or the like. Rolling can increase the orientation of the surface layer sections, in particular. The area increase by rolling is preferably by a factor of greater than 1 and no greater than 3, and more preferably a factor of greater than 1 and no greater than 2. If the rolling factor exceeds 1, the plane orientation will increase and the membrane strength of the final porous membrane will tend to increase. If the rolling factor is 3 or lower, there will be less of a difference in orientation between the surface layer portion and center interior portion, tending to allow formation of a porous structure that is more uniform in the thickness direction of the membrane.

The pore-forming material is then removed from the cast sheet to obtain a porous membrane. The method of removing the pore-forming material may be, for example, a method of immersing the cast sheet in an extraction solvent to extract the pore-forming material, and then thoroughly drying it. The method of extracting the pore-forming material may be either a batch process or a continuous process. In order to minimize contraction of the porous membrane, it is preferred to constrain the edges of the cast sheet during the series of steps of immersion and drying. The residue of the pore-forming material in the porous membrane is preferably less than 1 weight% of the total weight of the porous membrane.

The extraction solvent used for extraction of the pore-forming material is preferably a poor solvent for the polyolefin resin and a good solvent for the pore-forming material, and one having a boiling point that is lower than the melting point of the polyolefin resin. Examples of such extraction solvents include hydrocarbons such as n-hexane and cyclohexane; halogenated hydrocarbons such as methylene chloride and 1,1,1-trichloroethane; non-chlorine-based halogenated solvents such as hydrofluoroethers and hydrofluorocarbons; alcohols such as ethanol and isopropanol; ethers such as diethyl ether and tetrahydrofuran; and ketones such as acetone and methyl ethyl ketone. These extraction solvents may be collected by a process such as distillation and then reutilized. When an inorganic material is used as the pore-forming material, an aqueous solution of sodium hydroxide or potassium hydroxide may be used as the extraction solvent.

The cast sheet or porous membrane is preferably also stretched. Stretching may also be carried out before extraction of the pore-forming material from the cast sheet. It may also be carried out on the porous membrane after the pore-forming material has been extracted from the cast sheet. Stretching may be carried out before and after extraction of the pore-forming material from the cast sheet.

Either uniaxial stretching or biaxial stretching can be suitably used for the stretching treatment, but biaxial stretching is preferred from the viewpoint of improving the strength of the obtained PO microporous membrane. When a cast sheet is subjected to high-ratio stretching in the biaxial directions, the molecules become oriented in the in-plane direction, such that the microporous membrane that is obtained as the final result is less likely to tear, and has high puncture strength.

Examples of stretching methods include simultaneous biaxial stretching, sequential biaxial stretching, multistage stretching and repeated stretching. Simultaneous biaxial stretching is preferred from the viewpoint of increasing the puncture strength and obtaining greater uniformity during stretching and superior shutdown properties. Successive biaxial stretching is preferred from the viewpoint of facilitating control of the planar orientation.

Simultaneous biaxial stretching is a stretching method in which stretching in the MD (the machine direction during continuous casting of the PO microporous membrane) and stretching in the TD (the direction crossing the MD of the PO microporous membrane at a 90° angle) are carried out simultaneously, and in such a case the stretching ratios in each direction may be different. Sequential biaxial stretching is a stretching method in which stretching in the MD and TD are carried out independently, in such a manner that when the MD or TD stretching is being carried out, the other direction is in a non-constrained state or in an anchored state with fixed length.

The stretch ratio is an area increase by a factor of preferably in the range of 20 to 100, and more preferably in the range of 25 to 70. The stretch ratio in each axial direction is preferably in the range of between 4 and 10 in the MD direction and between 4 and 10 in the TD direction, and more preferably in the range of between 5 and 8 in the MD direction and between 5 and 8 in the TD direction. If the total area factor is 20 or greater the obtained PO microporous membrane will tend to be imparted with sufficient strength, and if the total area factor is 100 or lower, membrane rupture will tend to be prevented in the stretching step, resulting in high productivity.

In order to help prevent shrinkage of the PO microporous membrane, heat treatment for heat setting may be carried out either after the stretching step or after formation of the PO microporous membrane. The PO microporous membrane may also be subjected to posttreatment such as hydrophilicizing treatment with a surfactant, or crosslinking treatment with ionizing radiation.

From the viewpoint of inhibiting shrinkage, the PO microporous membrane is preferably subjected to heat treatment for heat setting. The method of heat treatment may include a stretching procedure carried out with a predetermined temperature atmosphere and a predetermined stretch ratio to adjust the physical properties, and/or a relaxation procedure with a predetermined temperature atmosphere and a predetermined relaxation factor to reduce the stretching stress. The relaxation procedure may also be carried out after the stretching procedure. Such heat treatment can be carried out using a tenter or roll stretcher.

From the viewpoint of obtaining a PO microporous membrane with higher strength and higher porosity, the stretching procedure is preferably stretching to a factor of 1.1 or greater and more preferably to a factor of 1.2 or greater in the MD and/or TD of the membrane.

The relaxation procedure is contraction in the MD and/or TD of the membrane. The relaxation factor is the value of the dimension of the film after relaxation divided by the dimension of the film before the relaxation. When relaxation is in both the MD and TD, it is the value of the relaxation factor in the MD multiplied by the relaxation factor in the TD. The relaxation factor is also preferably 1.0 or lower, more preferably 0.97 or lower and even more preferably 0.95 or lower. The relaxation factor is preferably 0.5 or higher from the viewpoint of membrane quality. The relaxation procedure may be carried out in both the MD and TD, or in only either of the MD or TD.

The stretching and relaxation procedures after extraction of the plasticizer are preferably carried out in the TD from the viewpoint of process control and of controlling the open hole area in 400°C solder testing. The temperatures for the stretching and relaxation procedures are preferably lower than the melting point (hereunder, "Tm") of the polyolefin resin, and more preferably in a range of 1°C to 25°C lower than the Tm. The temperatures for the stretching and relaxation procedures are preferably within this range from the viewpoint of balance between heat shrinkage factor reduction and porosity.

<Disposing of porous layers>

The method of disposing the porous layers on at least one side of the PO microporous membrane may be a known disposing method, coating method, lamination method or extrusion method. An example is a method of applying a coating solution containing the inorganic particles and binder polymer described above onto the PO microporous membrane to form a porous layer.

The method of disposing the first porous layer onto one side of the polyolefin microporous membrane (PO microporous membrane) and disposing the second porous layer onto the other side of the PO microporous membrane may also be a known disposing method, coating method, lamination method or extrusion method. An example is a method of applying a coating solution containing the inorganic particles and binder polymer described above onto the PO microporous membrane to form a porous layer.

The binder polymer in the coating solution may be in a form dissolved or dispersed in water as an aqueous solution, or dissolved or dispersed in a common organic medium as an organic medium-based solution, but it is preferably a resin-based latex and more preferably an acrylic polymer latex. A "resin-based latex" is a dispersion of a resin in a medium. When a resin-based latex has been used as the binder, the ion permeability will be unlikely to fall and a high output characteristic will be more easily obtained, when the porous layer including inorganic particles and a binder is layered onto at least one side of the PO microporous membrane. Even with rapid temperature increase that occurs during abnormal heat release, a smooth shutdown property is exhibited and a high degree of safety can be obtained more easily.

The amount of binder polymer used with respect to the amount of inorganic particles used when forming the coating solution is not restricted, but it is preferably an amount that is sufficient to adjust the dynamic friction coefficient of the porous layer to within the range of 0.1 to 0.6 after formation of the separator, as mentioned below.

The mean particle size of the resin-based latex binder is preferably 50 nm to 1,000 nm, more preferably 60 nm to 500 nm, even more preferably 65 nm to 250 nm and most preferably 70 nm to 150 nm. If the mean particle size is 50 nm or greater, the ion permeability will be unlikely to fall and a high output characteristic can be easily obtained. Even with rapid temperature increase that occurs during abnormal heat release, a smooth shutdown property is exhibited and a high degree of safety can be obtained more easily. If the mean particle size is 1,000 nm or smaller, a satisfactory binding property will be exhibited when the porous layer that includes the inorganic particles and binder polymer has been layered on at least one side of the PO microporous membrane, thus tending to allow the separator to exhibit satisfactory heat shrinkage and excellent safety. The mean particle size can be controlled by adjusting the polymerization time, the polymerization temperature, the compositional ratio and loading order of the starting materials, the pH and the stirring speed, during production of the binder polymer.

16

The medium for the coating solution is preferably one that can uniformly and stably dissolve or disperse the inorganic particles and binder polymer, and examples include N-methylpyrrolidone, N,N-dimethylformamide, N,N-dimethyl acetamide, water, ethanol, toluene, hot xylene, methylene chloride and hexane.

Various additives such as surfactants or other thickeners; moistening agents; antifoaming agents; or acid- or alkali-containing pH adjustors, may also be added to the coating solution to improve the dispersion stability or coatability and to adjust the contact angle on the surface of the porous layer. The total amount of such additives, in terms of active ingredient (weight of the dissolved additive component, when the additive is dissolved in a solvent) with respect to 100 parts by weight of the inorganic particles, is preferably 20 parts by weight or lower, more preferably 10 parts by weight or lower and even more preferably 5 parts by weight or lower.

Examples of anionic surfactant additives include higher fatty acid salts, alkylsulfonates, $\alpha$-olefin sulfonates, alkane sulfonates, alkylbenzene sulfonates, sulfosuccinic acid ester salts, alkylsulfuric acid ester salts, alkyl ether sulfuric acid ester salts, alkylphosphoric acid ester salts, alkyl ether phosphoric acid ester salts, alkyl ether carboxylates, $\alpha$-sulfo fatty acid methyl ester salts and methyltaurine acid salts. Examples of nonionic surfactants include glycerin fatty acid esters, polyglycerin fatty acid esters, sucrose fatty acid esters, sorbitan fatty acid esters, polyoxyethylene sorbitan fatty acid esters, polyoxyethylene alkyl ethers, polyoxyethylene alkylphenyl ethers, polyoxyethylene fatty acid esters, fatty acid alkanolamides and alkyl glucosides. Examples of amphoteric surfactants include alkyl betaines, fatty acid amide propyl betaine and alkylamine oxides. Examples of cationic surfactants include alkyltrimethylammonium salts, dialkyldimethylammonium salts, alkyldimethylbenzylammonium salts and alkylpyridinium salts. Other examples include fluorine-based surfactants, and polymer surfactants such as cellulose derivatives, polycarboxylic acid salts and polystyrenesulfonic acid salts.

The method of dissolving or dispersing the inorganic particles and binder polymer in the coating solution medium is not particularly restricted so long as it allows the coating solution to exhibit the necessary dispersion properties for the coating step. Examples include mechanical stirring using a ball mill, bead mill, planetary ball mill, vibrating ball mill, sand mill, colloid mill, attritor, roll mill, high-speed impeller disperser, disperser, homogenizer, high-speed impact mill, ultrasonic disperser or stirring blade.

The method of coating the coating solution onto the PO microporous membrane is not particularly restricted so long as the necessary layer thickness or coating area can be ensured, and examples include gravure coater methods, small-diameter gravure coater methods, reverse roll coater methods, transfer roll coater methods, kiss coater methods, dip coater methods, knife coater methods, air doctor coater methods, blade coater methods, rod coater methods, squeeze coater methods, cast coater methods, die coater methods, screen printing methods and spray coating methods.

The surface of the PO microporous membrane is preferably surface-treated prior to application of the coating solution, because the coating solution will be easier to apply and adhesion between the inorganic particle-containing porous layer and the PO microporous membrane surface will be increased. The method of surface treatment is not particularly restricted so long as it does not significantly impair the porous structure of the PO microporous membrane, and examples include corona discharge treatment, plasma discharge treatment, mechanical roughening methods, solvent treatment and ultraviolet ray oxidation methods.

The method of removing the medium from the coated film after application is also not particularly restricted so long as it does not adversely affect the PO microporous membrane, and examples include methods of anchoring the PO microporous membrane while drying it at a temperature below its melting point, methods of reduced pressure drying at low temperature, and methods of extraction drying. Some of the solvent may be allowed to remain so long as it does not produce any notable effect on the power storage device properties. The multilayer porous membrane having the porous layer laminated on the PO microporous membrane preferably has its drying temperature and take-up tension appropriately adjusted from the viewpoint of controlling shrinkage stress in the MD direction.

<Separator for power storage device>

The multilayer porous membranes of embodiments 1 to 3 can be used as separators for a power storage device. A power storage device comprises a positive electrode, a separator, a negative electrode, and optionally an electrolyte solution. Specifically, the power storage device may be a lithium battery, lithium secondary battery, lithium ion secondary battery, sodium secondary battery, sodium ion secondary battery, magnesium secondary battery, magnesium ion secondary battery, calcium secondary battery, calcium ion secondary battery, aluminum secondary battery, aluminum ion secondary battery, nickel hydrogen battery, nickel cadmium battery, electrical double layer capacitor, lithium ion capacitor, redox flow battery, lithium sulfur battery, lithium-air battery or zinc air battery, for example. Preferred among these, from the viewpoint of practicality, is a lithium battery, lithium secondary battery, lithium ion secondary battery, nickel hydrogen battery or lithium ion capacitor, with a lithium ion secondary battery being more preferred.

A power storage device can be fabricated, for example, by stacking a positive electrode and negative electrode across a separator comprising a multilayer porous membrane according to any of embodiments 1 to 3, if necessary winding or folding it in a zig-zag form to form a stacked electrode body, wound electrode body or zig-zag-folded body, and then packing it in an exterior, connecting the positive and negative electrodes and the positive and negative electrode terminals of the exterior via leads or the like, injecting a nonaqueous electrolyte solution containing a nonaqueous solvent such as a straight-chain or cyclic carbonate and an electrolyte such as a lithium salt into the exterior, and finally sealing the exterior.

<Battery>

A multilayer porous membrane according to any of embodiments 1 to 3 may be used as a separator, with a plurality of electrodes stacked via the separator, to obtain a stacked body with the separator and electrodes stacked together. The obtained stacked body or a wound body or zig-zag-folded body obtained by winding or zig-zag-folding the stacked body can be used to produce a nonaqueous electrolyte solution battery. A nonaqueous electrolyte solution battery using a multilayer porous membrane according to any of embodiments 1 to 3 as the separator is superior in nail penetration testing and impact testing.

The method for producing the stacked body is not particularly restricted, and as an example it may include a step of stacking the separator and electrodes, and heating and/or pressing the stack if necessary. The heating and/or pressing can be carried out during stacking of the electrodes and separator. After the electrodes and separator have been stacked, a wound body obtained by winding into a circular or flat spiral shape may be heated and/or pressed. The heating and pressing step for the stacked body may be carried out after fabrication of the stacked body, or after the stacked body has been housed in an exterior and the electrolyte solution has been injected into the exterior.

The nonaqueous electrolyte solution battery comprises a stacked body as described above, a wound body obtained by winding the stacked body, or a zig-zag-folded body obtained by zig-zag-folding the stacked body, together with a nonaqueous electrolyte solution, inside an exterior such as a cylindrical can, a pouch-type case or a laminate case.

When the nonaqueous electrolyte solution battery is a secondary battery, a positive electrode terminal may be welded to the edge of a positive electrode stacked body comprising a positive electrode collector and a positive electrode active material layer, while a negative electrode terminal may be welded to the edge of a negative electrode stacked body comprising a negative electrode collector and a negative electrode active material layer, so that a secondary battery comprising a terminal-attached positive electrode stacked body and a terminal-attached negative electrode stacked body can be subjected to charge-discharge.

The terminal-attached positive electrode stacked body and the terminal-attached negative electrode stacked body may then be stacked across a separator and optionally wound or zig-zag-folded, and the obtained stacked body, wound body or zig-zag-folded body may be housed in an exterior, with injection of a nonaqueous electrolyte solution into the exterior and sealing of the exterior, to obtain a secondary battery.

When the multilayer porous membrane according to any of embodiments 1 to 3 is to be used as a separator for production of a nonaqueous electrolyte solution secondary battery, the positive electrode, negative electrode and nonaqueous electrolyte solution used may be known ones.

The positive electrode material is not particularly restricted, and examples include lithium-containing composite oxides such as $LiCoO_2$, $LiNiO_2$, spinel-type $LiMnO_4$ and olivine-type $LiFePO_4$.

The anode material is also not particularly restricted, and examples include carbon materials such as graphite, non-graphitizable carbon, easily graphitizable carbon and complex carbon; or silicon, tin, metal lithium and various alloy materials.

There are no particular restrictions on the nonaqueous electrolyte solution, and an electrolyte solution comprising an electrolyte dissolved in an organic solvent may be used. Examples of organic solvents include propylene carbonate, ethylene carbonate, dimethyl carbonate, diethyl carbonate and ethyl methyl carbonate. Examples of electrolytes include lithium salts such as $LiClO_4$, $LiBF_4$ and $LiPF_6$.

<Stacked lithium ion secondary battery>

Another aspect of the invention is a stacked lithium ion secondary battery having a hairpin-folded body, comprising a multilayer porous membrane according to embodiment 2 or 3 folded in a hairpin fashion, housed in an exterior, and having positive electrodes and negative electrodes alternately inserted in the gaps of the zig-zag-folded body. The stacked lithium ion secondary battery may further include the electrolyte solution described above. A stacked lithium ion secondary battery using a multilayer porous membrane of embodiment 2 or 3 as the separator exhibits superior performance in nail penetration testing and impact testing.

EXAMPLES

Embodiments of the invention will now be explained in detail through Examples and Comparative Examples, with the understanding that these Examples and Comparative Examples are not limitative on the invention.

<Test Series I (for embodiment 1)>

Testing and evaluation methods

<SEM observation of BIB cross-section>

A cross-section of the multilayer porous membrane is obtained using a BIB (broad ion beam). Formation of the cross-section is formed with an IM4000 by Hitachi High-Technologies Corp., under processing conditions with an acceleration voltage of 3 kV and a beam current of 60 to 65 $\mu$A. In order to reduce heat damage during processing, the multilayer porous membrane may be cooled as necessary just before processing. Specifically, the multilayer porous membrane is allowed to stand for a day and a night in a cooling device at -40°C. This allows a smooth cross-section of the multilayer porous membrane to be obtained.

The obtained cross-section of the multilayer porous membrane is then conduction-treated with C paste and Os coating, after which a "HITACHI[R] S-4800" (Hitachi High-Technologies Corp.) is used to take an electronic image as a cross-sectional SEM image with a photograph magnification of 30,000x, an acceleration voltage of 1.0 kV and the detector set to "secondary electron" (UPPER).

During imaging, the image is captured with the porous layer as the center, as in the cross-sectional SEM image shown in Fig. 1, including the interface portion between the PO microporous membrane and the porous layer at the lower part of the captured image, and a region of the PO microporous membrane with a thickness of 0.1 to 0.2 $\mu$m from the interface portion.

Images of three visual fields are taken in this manner.

<Binarization>

The number of holes S and the percentage T of the number of holes of 0.001 $\mu$m$^2$ to 0.05 $\mu$m$^2$ with respect to the total number of holes are calculated by the following method using "Fiji" (Fuji Is Just ImageJ) image processing software. Fig. 2 to Fig. 6 show concrete examples of binarization for calculation.

First, "File" -> "Open" is clicked to open the cross-section SEM electronic image of interest. Next, the straight-line selection tool "Straight" is used to measure a known distance in the image. The measuring units and known distance are then inputted to set the scale, by opening "Analyze" -> "SET SCALE".

Next, "Rectangular selections" is used to select a desired region (porous layer), for selection of the area to be evaluated in the binarization. For selection of the desired region in the height (vertical) direction of the image, if the thickness of the porous layer is 1.0 $\mu$m or greater, selection is made of the remaining area after excluding the location up to a thickness of 0.2 $\mu$m on the porous layer side from the interface between the PO microporous membrane and porous layer, and the location up to a thickness of 0.2 $\mu$m from the outer surface of the porous layer, as shown in Fig. 2. When the outer surface of the porous layer does not appear in the image, the location up to 0.2 $\mu$m from the top of the image is excluded. When the thickness of the porous layer is less than 1.0 $\mu$m, on the other hand, 1/10 of each thickness from the interface and the outer surface are excluded, and the other 80% is selected as the remainder. The entire image is selected in the horizontal direction.

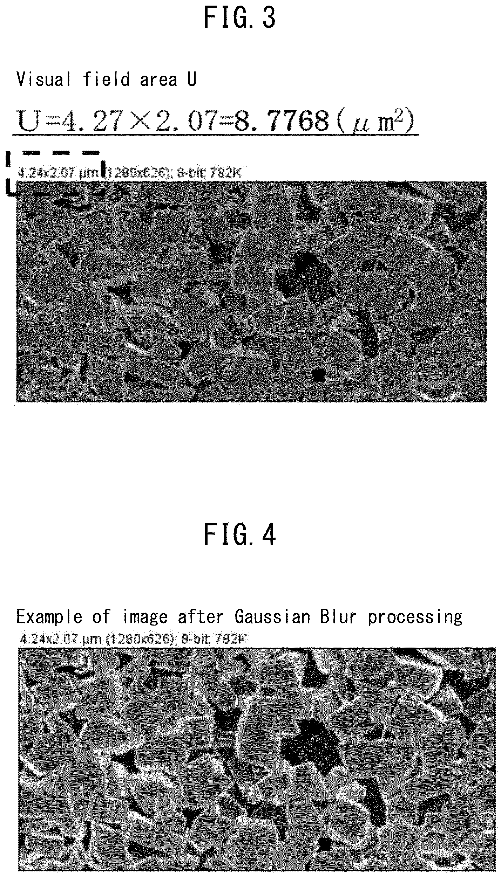

Next, "Image" -> "Crop" is clicked to display only the selected area. The visual field area U of the selected area is calculated at this time, as shown in Fig. 3.

The contrast of the cross-sectional SEM image is then flattened. Specifically, "Process" $\rightarrow$ "Enhance Contrast" is opened, setting "Saturated pixels" to 0.3%, and checking "Equalize histogram", and "OK" is clicked. This processing accentuates contrast of the image, rendering the light areas (the edges of the inorganic filler particles) lighter and the dark (hole) areas darker.

Next, "Plugins" -> "Process" -> "Bilateral Filter" is opened, setting 16 for "Spatial radius" and 64 for "range radius", and "OK" is clicked. This processing removes noise while retaining the edges of the filler particles.

Next, "Process" -> "Filters" -> "Gaussian Blur" is opened, setting 1.0 for "Sigma (radius)", and "OK" is clicked. This results in an image as shown in Fig. 4.

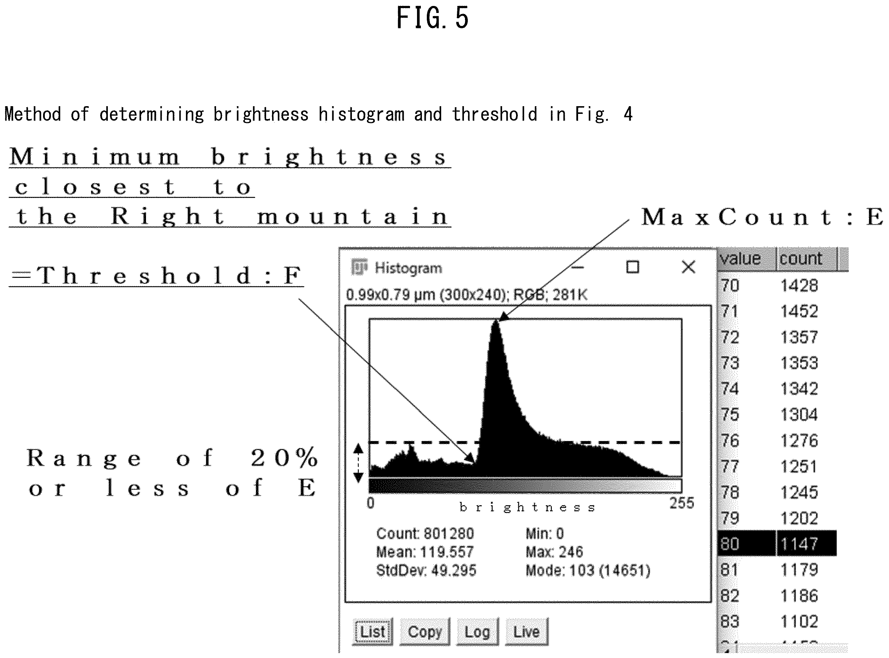

The threshold is then set using Fig. 4, for binarization processing. Specifically, "Analysis" $\rightarrow$ "Histogram" is selected, and as shown in Fig. 5, a graph representing number (ordinate) with respect to brightness (abscissa) in tones from 0 to 255 is used with "List". As shown in Fig. 5, the number E of maximum peaks at the center of the histogram is read off from "List". A brightness threshold F is read off from the List, as the brightness F corresponding to a number of $\leq$20% of E in the direction toward 0 brightness from the peak top (the left side of the peak), and corresponding to the nearest minimum to the peak.

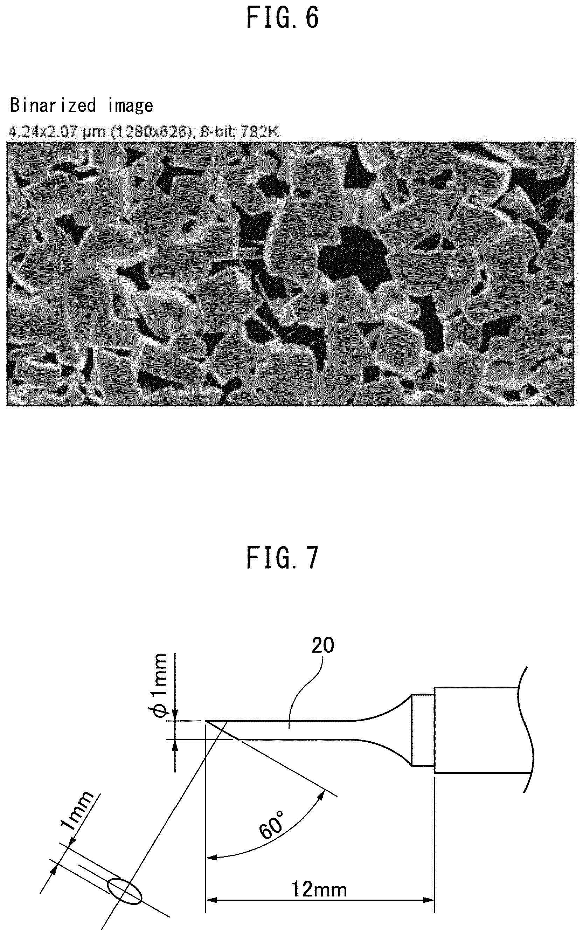

Next, "Image" -> "Adjust" -> "Threshold" is selected. "Set" is pressed, the "Lower threshold level" is set to 0, the brightness F (threshold) is inputted as the "Upper threshold level", and "OK" is clicked. Fig. 6 is obtained with black shading of the hole sections of the image of Fig. 4.

Binarization processing is carried out next. Specifically, "Analyze" -> "Analyze particles" is selected, "0.001-Infinity" is inputted for "Size ($\mu$m²)" and "Display results" "Clear results" "Exclude on edges" "Include holes" "Add to Manager" are all checked, after which "OK" is clicked to obtain the number of holes X of 0.001 $\mu$m² or greater and the area value of each hole, for the visual field area U $\mu$m².

The number of holes in a 10 $\mu$m² visual field is calculated for the obtained number of holes and the visual field area U $\mu$m².

The number of holes of 0.001 $\mu$m² to 0.05 $\mu$m² is then also calculated, and the percentage of the number of holes of 0.001 $\mu$m² to 0.05 $\mu$m² with respect to the total number of holes X is calculated.

In this method, the number of holes in the 10 $\mu$m² visual field, and the number of holes of 0.001 $\mu$m² to 0.05 $\mu$m² with respect to the total number of holes X, are both calculated from the 3 images, and their averages are recorded as the number of holes S and the percentage T of the number of holes of 0.001 $\mu$m² to 0.05 $\mu$m² with respect to the total number of holes X.

<Film thicknesses ($\mu$m) of PO microporous membrane, multilayer porous membrane and multilayer membrane>

A "KBM™" microthickness meter by Toyo Seiki Co., Ltd. was used to measure the thicknesses of the polyolefin microporous membrane and multilayer porous membrane at room temperature (23 $\pm$2°C), and the coating thicknesses of the porous layers were each calculated from the measured thicknesses. The cross-sectional SEM image may also be used to measure the thickness of each layer, as values by detection from the multilayer porous membrane.

<Melt index (MI) (g/10 minutes) of polyolefin microporous membrane>

The melt index (MI) of the polyolefin microporous membrane (PO microporous membrane) was measured according to JIS K7210:1999 (Plastic-thermoplastic melt mass-flow rate (MFR) and melt volume flow rate (MVR)). A 21.6 kgf load was placed on the membrane at 190°C, and the amount of resin (g) exuding in 10 minutes from an orifice with a diameter of 1 mm and a length of 10 mm was measured, recording the MI as the value with the first decimal place rounded upward.

<Aspect ratio of inorganic particles in porous layer>

A cross-section of the multilayer membrane was photographed using a "HITACHI™ S-4800" scanning electron microscope (SEM) (Hitachi High-Technologies Corp.) at 10,000x magnification, and the inorganic particles in layer B were analyzed by image processing to determine the aspect ratio. When the inorganic particles were bonded together, single inorganic particles whose lengths and widths could be clearly determined were selected and used for calculation of the aspect ratio. Specifically, 10 particles whose lengths and widths could be clearly determined were selected, and the long axis length of each inorganic particle was divided by the short axis length and averaged to determine the aspect ratio. When a single visual field did not contain 10 particles whose lengths and widths could be clearly determined, 10 particles were selected from multiple visual field images.

<Mean particle size and particle size distribution of inorganic particles>

For the particle size distribution and median diameter ($\mu$m) of the inorganic particle dispersion or slurry coating solution, the particle size distribution of the inorganic particle dispersion or slurry coating solution was measured using a laser particle size distribution analyzer (Microtrac MT3300EX by Nikkiso Co., Ltd.). When necessary, the particle size distribution of the water or binder polymer was used as the baseline for adjustment of the particle size distribution of the inorganic particle dispersion or slurry coating solution. The particle size with 50% cumulative frequency was recorded as $D_{50}$, the particle size with 10% cumulative frequency was recorded as $D_{10}$ and the particle size with 90% cumulative frequency was recorded as $D_{90}$.

<Air permeability (sec/100 cm³), and air permeability ratio of multilayer porous membrane with respect to multilayer porous membrane and polyolefin microporous membrane>

The air permeability of the multilayer porous membrane and the air permeability of the PO microporous membrane, where the air permeability is defined as the air permeability resistance according to JIS P-8117, was measured using a "G-B2™" Gurley air permeability tester by Toyo Seiki Kogyo Co., Ltd. according to JIS P-8117, measuring the air permeability resistance of the multilayer porous membrane and PO microporous membrane in an atmosphere with a temperature of 23°C and a humidity of 40%.

The value of the air permeability of the multilayer porous membrane divided by the air permeability of the PO microporous membrane was recorded as the air permeability ratio of the multilayer porous membrane with respect to the multilayer porous membrane and polyolefin microporous membrane.

<Inorganic particle content (weight %) in porous layer>

This can be calculated from the mixing ratio of the constituent materials during preparation of the coating solution.

For detection from the multilayer porous membrane, a TG-DTA may be used to measure the changes in weights of the organic materials and inorganic particles. Specifically, a portion of the porous layer is scraped off from the multilayer porous membrane with a glass plate to obtain an 8 mg to 10 mg sample. The porous layer sample is set in the apparatus and the change in weight is measured in an air atmosphere while raising the temperature from room temperature to 600°C at a temperature-elevating rate of 10°C/min, and used for calculation.

<Porosity (%)>

A 10 cm $\times$ 10 cm-square sample was cut out from the microporous membrane, and its volume ($cm^3$) and mass (g) were determined and used together with the membrane density ($g/cm^3$) by the following formula, to obtain the porosity.

$$\text{Porosity (\%)} = (\text{Volume} - \text{mass/density})/\text{volume} \times 100$$

<Puncture strength (gf) and basis weight-equivalent puncture strength ($gf/(g/m^2)$)>

Using a Handy Compression Tester "KES-G5™" by Kato Tech Corp., the microporous membrane was anchored with a specimen holder having an opening diameter of 11.3 mm. Next, the center section of the anchored microporous membrane was subjected to a puncture test with a needle having a tip curvature radius of 0.5 mm, at a puncture speed of 2 mm/sec and in an atmosphere with a temperature of 23°C and a humidity of 40%, the raw puncture strength (gf) being obtained as the maximum puncture load. The value of the obtained puncture strength (gf) in terms of basis weight ($gf/(g/m^2)$) was also calculated.

<Heat shrinkage factor (%) at 130°C and 150°C>

The multilayer porous membrane as the sample was cut out to 100 mm in the MD direction and 100 mm in the TD direction, and allowed to stand for 1 hour in an oven at 130°C or 150°C. During this time, the sample was sandwiched between 10 sheets of paper so as to avoid direct contact of the sample with warm air. After removing the sample from the oven and cooling it, the length (mm) was measured and the heat shrinkage factor was calculated by the following formula. Measurement was in the MD direction and TD direction, with the larger value being recorded as the heat shrinkage factor.

$$\text{Heat shrinkage factor (\%)} = \{(100 - \text{length after heating})/100\} \times 100$$

<Nail penetration test>

(Fabrication of positive electrode)

There were uniformly mixed: a mixed positive electrode active material comprising lithium-nickel-manganese-cobalt composite oxide powder ($LiNi_{1/3}Mn_{1/3}Co_{1/3}O_2$) and lithium-manganese composite oxide powder ($LiMn_2O_4$), mechanically mixed at a weight ratio of 70:30, as a positive electrode active material: 85 parts by weight, acetylene black as a conductive aid: 6 parts by weight, and PVdF as a binder: 9 parts by weight, with N-methyl-2-pyrrolidone (NMP) as the solvent, to prepare a positive electrode mixture-containing paste. The positive electrode mixture-containing paste was evenly coated onto both sides of a 20 $\mu$m-thick current collector made of aluminum foil and dried, after which it was compression molded with a roll press, adjusting the thickness of the positive electrode mixture layer to a total thickness of 130 $\mu$m. A positive electrode was fabricated having a non-active material-coated aluminum foil with a length of 20 mm as a lead tab on a short side top section of a rectangular sheet with 95 mm short sides and 120 mm long sides.

(Fabrication of negative electrode)

Graphite as a negative electrode active material: 91 parts by weight and PVdF as a binder: 9 parts by weight were mixed to uniformity with NMP as the solvent, to prepare a negative electrode mixture-containing paste. The negative electrode mixture-containing paste was evenly coated onto both sides of a 15 $\mu$m-thick current collector made of copper foil and dried, after which it was compression molded with a roll press, adjusting the thickness of the negative electrode mixture layer to a total thickness of 130 $\mu$m. A negative electrode was fabricated having a non-active material-coated copper foil with a length of 20 mm as a lead tab on a short side top section of a rectangular sheet with 95 mm short sides and 120 mm long sides.

(Preparation of nonaqueous electrolyte solution)

A nonaqueous electrolyte solution was prepared by dissolving 1.0 mol/liter concentration $LiPF_6$, as a solute, in a mixed solvent of ethylene carbonate:ethyl methyl carbonate:dimethyl carbonate = 1:1:1 (volume ratio).

(Fabrication of cell)

A electrode plate stack was fabricated by alternately stacking 27 positive electrode sheets and 28 negative electrode sheets, each separated by a multilayer porous membrane as the separator. The separator was a separator strip with a width of 125 mm, which was alternately folded in a zig-zag form to fabricate the electrode plate stack. After flat-pressing the electrode plate stack, it was housed in an aluminum laminate film and three of the sides were heat sealed. A positive electrode lead tab and negative electrode lead tab were each drawn out from one side of the laminate film. After drying, the nonaqueous electrolyte solution was injected into the three side-sealed laminate film and the remaining side was sealed. The laminated lithium ion secondary battery fabricated in this manner was designed for a capacity of 10 Ah.

(Nail penetration evaluation)

The laminated lithium ion secondary battery was set on a steel sheet in a temperature-adjustable explosion-proof booth. Setting the explosion-proof booth interior to a temperature of 40°C, the center section of the laminated lithium ion secondary battery was punctured with an iron nail having a diameter of 3.0 mm at a speed of 2 mm/sec, and the nail was left in the punctured state. A thermocouple had been set inside the nail so as to allow measurement inside the laminated battery after puncturing with the nail, and its temperature was measured and the presence or absence of ignition and the maximum ultimate temperature were evaluated as follows.

A: No ignition, maximum ultimate temperature of <300°C
B: No ignition, maximum ultimate temperature of ≥300°C
C: Ignition after 15 seconds from start of the test
D: Ignition within 15 seconds from start of the test

<Rate property>

(a. Fabrication of positive electrode)

A slurry was prepared by dispersing 91.2 parts by weight of lithium-nickel-manganese-cobalt composite oxide $(Li[Ni_{1/3}Mn_{1/3}Co_{1/3}]O_2)$ as a positive electrode active material, 2.3 parts by weight each of scaly graphite and acetylene black as conductive materials, and 4.2 parts by weight of polyvinylidene fluoride (PVdF) as a resin binder, in N-methylpyrrolidone (NMP). The slurry was coated using a die coater onto one side of aluminum foil with a thickness of 20 $\mu$m as the positive electrode, to a positive electrode active material coating amount of 120 g/m². After 3 minutes of drying at 130°C, a roll press was used for compression molding to a positive electrode active material bulk density of 2.90 g/cm³, to produce a positive electrode. The positive electrode was punched out to a circle with an area of 2.00 cm².

(b. Fabrication of negative electrode)

A slurry was prepared by dispersing 96.6 parts by weight of artificial graphite as a negative electrode active material, 1.4 parts by weight of carboxymethyl cellulose ammonium salt as a resin binder and 1.7 parts by weight of styrene-butadiene copolymer latex, in purified water. The slurry was coated using a die coater onto one side of copper foil with a thickness of 16 $\mu$m as the negative electrode collector, to a negative electrode active material coating amount of 53 g/m². After 3 minutes of drying at 120°C, a roll press was used for compression molding to a negative electrode active material bulk density of 1.35 g/cm³, to produce a negative electrode. This was punched out to a circle with an area of 2.05 cm².

(c. Preparation of nonaqueous electrolyte solution)

A 1.0 mol/L portion of concentrated $LiPF_6$, as a solute, was dissolved in a mixed solvent of ethylene carbonate:ethyl carbonate = 1:2 (volume ratio), to prepare a nonaqueous electrolyte solution.

(d. Battery assembly)

The negative electrode, multilayer porous membrane and positive electrode were stacked in that order from the bottom with the active material sides of the positive electrode and negative electrode facing each other. The stack was housed in a covered stainless steel metal container, with the container body and cover insulated, and with the copper foil of the negative electrode and the aluminum foil of the positive electrode each contacting with the container body and cover, to obtain a cell. The cell was dried under reduced pressure at 70°C for 10 hours. A nonaqueous electrolyte solution was then injected into the container in an argon box and the cell was sealed as a cell for evaluation.

(e. Evaluation of rate property)

Each battery assembled as described in (d. Battery assembly) above was subjected to initial charging after battery fabrication, for a total of approximately 6 hours, to a cell voltage of 4.2 V at a temperature of 25°C and a current value of 3 mA (~0.5 C), and further beginning to draw out the current value from 3 mA while maintaining 4.2 V, and then to discharge up to a cell voltage of 3.0 V at a current value of 3 mA.

Next, the battery was subjected to charge for a total of approximately 3 hours, by a method of charge to a cell voltage of 4.2 V at a current value of 6 mA (~1.0 C) at 25°C and further beginning to draw out the current value from 6 mA while maintaining 4.2 V, and then to discharge up to a cell voltage of 3.0 V at a current value of 6 mA, obtaining the service capacity at that time as the 1 C service capacity (mAh).

Next, the battery was subjected to charge for a total of approximately 3 hours, by a method of charge to a cell voltage of 4.2 V at a current value of 6 mA (~1.0 C) at 25°C and further beginning to draw out the current value from 6 mA while maintaining 4.2 V, and then to discharge up to a cell voltage of 3.0 V at a current value of 60 mA (~10 C), obtaining the service capacity at that time as the 10 C service capacity (mAh).

The ratio of the 10 C service capacity with respect to the 1 C service capacity was calculated and the value recorded as the rate property.

$$\text{Rate property at 10 C (\%)} = (10\ \text{C service capacity}/1\ \text{C service capacity}) \times 100$$

The rate property at 10 C was evaluated on the following scale.

A: 10 C rate property of $\geq$22%
B: 10 C rate property of $\geq$20% and <22%
C: 10 C rate property of $\geq$18% and <20%
D: 10 C rate property of <18%

<Cycle test>

The battery tested in <Rate property> above was discharged at a discharge current of 1 C to a final discharge voltage of 3 V at a temperature of 25°C, and then charged at a charging current of 1 C to a final charge voltage of 4.2 V. Charge-discharge was repeated with this procedure as 1 cycle. The capacity retention after 300 cycles with respect to the initial capacity (the capacity at the first cycle) was used to evaluate the cycle characteristic on the following scale.

A: Capacity retention of $\geq$65%.
B: Capacity retention of $\geq$60% and <65%.
C: Capacity retention of <60%.

[Example 1]

A tumbler blender was used to form a polymer blend comprising 46.5 weight% of homopolymer polyethylene (PE) with a viscosity-average molecular weight (Mv) of 700,000, 46.5 weight% of homopolymer PE with an Mv of 250,000 and 7 weight% of homopolymer polypropylene (PP) with an Mv of 400,000, as shown in Table 1. To 99 parts by weight of the polymer blend there was added 1 part by weight of pentaerythrityl-tetrakis-[3-(3,5-di-t-butyl-4-hydroxyphenyl)propionate] as an antioxidant, and a tumbler blender was again used for dry blending to obtain a polymer mixture. The obtained polymer mixture was substituted with nitrogen and then supplied to a twin-screw extruder using a feeder under a nitrogen atmosphere. Liquid paraffin (kinematic viscosity at 37.78°C: 7.59 $\times$ 10$^{-5}$ m$^2$/s) was also injected into the extruder cylinder by a plunger pump.

The mixture was melt kneaded with adjustment of the feeder and pump for a liquid paraffin quantity ratio of 68 weight% in the total extruded mixture (resin composition concentration of 32 weight %). The melt kneading conditions were a preset temperature of 200°C, a screw rotational speed of 70 rpm and a discharge throughput of 145 kg/h.

The melt kneaded mixture was then extrusion cast through a T-die onto a cooling roll controlled to a surface temperature of 25°C, to obtain a gel sheet with a thickness of 1350 $\mu$m.

The gel sheet was then simultaneously fed into a biaxial tenter stretching machine for biaxial stretching. The stretching conditions were an MD factor of 7.0, a TD factor of 6.38 and a preset temperature of 122°C. It was then fed into a methylene chloride tank and thoroughly immersed in the methylene chloride for extraction removal of the liquid paraffin, after which the methylene chloride was dried off to obtain a porous body.

The porous body was then fed to a TD tenter and heat set. The heat setting temperature was 132°C, the maximum TD factor was 1.85 and the relaxation factor was 0.784, to obtain a polyolefin microporous membrane with a thickness of 12 $\mu$m.

Next, as shown in Table 1, 100 parts by weight of water and 0.5 parts by weight of aqueous ammonium polycarboxylate (as solid content) were mixed with 94.6 parts by weight of aluminum hydroxide oxide (boehmite, block-shaped, D$_{50}$ = 0.3 $\mu$m) as the inorganic particles, and bead mill treatment was carried out. The bead mill treatment was carried out with a bead diameter of 0.1 mm and a rotational speed of 2000 rpm in the mill. To the treated liquid mixture there were added 0.2 part by solid weight of xanthan gum as a thickener and 4.7 parts by solid weight of an acrylic latex (40% solid concentration), to prepare a coating solution. The particle size of the inorganic particles in the coating solution was D$_{10}$ = 0.13 $\mu$m, D$_{50}$ = 0.25 $\mu$m and D$_{90}$ = 0.50 $\mu$m The coating solution viscosity was 130 mPa·sec.

The surface of the polyolefin microporous membrane was subjected to corona discharge treatment, after which a gravure coater was used to coat the treated surface with the coating solution. After then drying the coating solution on the polyolefin microporous membrane at 60°C to remove the water, a porous layer with a coating thickness of 3.0 $\mu$m was formed on one side of the polyolefin microporous membrane to obtain a multilayer porous membrane. Table 1 shows the membrane properties of the obtained multilayer porous membrane, and the evaluation results of a battery comprising the multilayer porous membrane as a separator.

[Examples 2 to 13 and Comparative Examples 1 to 6]

Multilayer porous membranes were formed in the same manner as Example 1, except that the starting material compositions and physical properties of the polyolefin microporous membranes, and the starting material types and coating conditions for the porous layers, were set as shown in Tables 1 to 3. The properties of the obtained multilayer porous membranes and batteries comprising them as separators were evaluated by the method described above. The evaluation results are shown in Tables 1 to 3.

[Example 14]

A multilayer porous membrane was formed in the same manner as Example 4, except that 70 weight% of homopolymer polyethylene (PE) with an Mv of 1,000,000 and 30 weight% of homopolymer PE with an Mv of 250,000 were used as the starting material composition of the polyolefin microporous membrane, and the method for producing the porous membrane used a discharge throughput of 130 kg/h, a gel sheet thickness of 1200 $\mu$m, a simultaneous biaxial stretching preset temperature of 117°C, a heat setting temperature of 135°C with the TD tenter, and a maximum TD factor of 1.90. The properties of the obtained multilayer porous membrane and a battery comprising it as a separator were evaluated by the method described above. The evaluation results are shown in Table 2.

[Example 15]

A multilayer porous membrane was formed in the same manner as Example 4, except that the method for producing the polyolefin microporous membrane used a discharge throughput of 125 kg/h, a gel sheet thickness of 1250 $\mu$m, a simultaneous biaxial stretching preset temperature of 120°C, a heat setting temperature of 130°C with the TD tenter, and a maximum TD factor of 1.50, and the thickness of the porous layer was 1.0 $\mu$m. The properties of the obtained multilayer porous membrane and a battery comprising it as a separator were evaluated by the method described above. The evaluation results are shown in Table 2.

[Table 1]

| | | | Example 1 | Example 2 | Example 3 | Example 4 | Example 5 | Example 6 | Example 7 |
|---|---|---|---|---|---|---|---|---|---|
| Constituent features and properties of PO microporous membrane | PE amount | (%) | 93 | 93 | 93 | 93 | 93 | 93 | 93 |
| | PP amount | (%) | 7 | 7 | 7 | 7 | 7 | 7 | 7 |
| | MI | (g/10 min) | 0.47 | 0.47 | 0.47 | 0.47 | 0.47 | 0.47 | 0.47 |
| | Thickness | ($\mu$m) | 12 | 12 | 12 | 12 | 12 | 12 | 12 |
| | Porosity | (%) | 42 | 42 | 42 | 42 | 42 | 42 | 42 |
| | Air permeability | (sec/100 cm$^3$) | 150 | 150 | 150 | 150 | 150 | 150 | 150 |
| | Puncture strength | (gf) | 500 | 500 | 500 | 500 | 500 | 500 | 500 |
| | Basis weight-equivalent puncture strength | (gf/(g/m$^2$)) | 76 | 76 | 76 | 76 | 76 | 76 | 76 |

| | | | Example 1 | Example 2 | Example 3 | Example 4 | Example 5 | Example 6 | Example 7 |
|---|---|---|---|---|---|---|---|---|---|
| Constituent features and properties of porous layer | Inorganic particle type | | Boehmite | Boehmite | Boehmite | Boehmite | Boehmite | Boehmite | Boehmite |
| | Inorganic particle form | | Block | Block | Block | Block | Block | Block | Block |
| | Inorganic particle diameter | $D_{50}$ ($\mu$m) | 0.30 | 0.30 | 0.30 | 0.55 | 0.55 | 0.55 | 0.55 |
| | Inorganic particle specific surface area | ($m^2$/g) | 15.0 | 15.0 | 15.0 | 7.0 | 7.0 | 7.0 | 7.0 |
| | Dispersing agent addition | (parts by weight) | 0.5 | 0.5 | 0.5 | 0.4 | 0.4 | 0.4 | 0.4 |
| | Bead diameter | (mm) | 0.1 | 0.1 | 0.1 | 0.1 | 0.1 | 0.1 | 0.1 |
| | Mill rotational speed | (rpm) | 2000 | 2000 | 3300 | 3300 | 3300 | 3300 | 3300 |
| | Binder polymer type | | Acrylic latex | Acrylic latex | PVdF | Acrylic latex | Acrylic latex | Acrylic latex | Acrylic latex |
| | Binder polymer addition amount | (parts by weight) | 4.7 | 4.7 | 6.5 | 3.8 | 3.8 | 3.8 | 6.4 |
| | Inorganic particle diameter in coating solution | $D_{10}$ ($\mu$m) | 0.13 | 0.13 | 0.13 | 0.22 | 0.22 | 0.22 | 0.22 |
| | | D50 ($\mu$m) | 0.25 | 0.25 | 0.25 | 0.42 | 0.42 | 0.42 | 0.42 |
| | | $D_{90}$ ($\mu$m) | 0.50 | 0.50 | 0.50 | 0.68 | 0.68 | 0.68 | 0.68 |
| | Coating solution viscosity | (mPa·sec) | 130 | 130 | 150 | 120 | 120 | 120 | 120 |
| | Inorganic particle content of porous layer | (%) | 94.6 | 94.6 | 92.9 | 95.6 | 95.6 | 95.6 | 92.9 |
| | Porous layer thickness | ($\mu$m) | 3.0 | 2.0 | 3.0 | 3.0 | 2.5 | 2.0 | 3.0 |
| | Number of holes S | (number) | 130 | 138 | 115 | 85 | 90 | 100 | 80 |
| | Percentage T | (%) | 100 | 99 | 100 | 96 | 96 | 95 | 97 |
| | Inorganic particle aspect ratio | | 1.7 | 1.7 | 1.7 | 1.8 | 1.8 | 1.8 | 1.8 |
| | Porous layer density | (g/$m^2$·$\mu$m) | 1.53 | 1.50 | 1.41 | 1.70 | 1.68 | 1.61 | 1.55 |

EP 3 998 155 B1

(continued)

| | | Example 1 | Example 2 | Example 3 | Example 4 | Example 5 | Example 6 | Example 7 |
|---|---|---|---|---|---|---|---|---|
| Multilayer porous membrane properties | Thickness (μm) | 15 | 14 | 14 | 15 | 14.5 | 14 | 15 |
| | Air permeability (sec/100 cm³) | 178 | 170 | 210 | 165 | 163 | 160 | 190 |
| | Air permeability ratio of multilayer porous membrane with respect to PO microporous membrane | 1.19 | 1.13 | 1.40 | 1.10 | 1.09 | 1.07 | 1.27 |
| | 130°C heat shrinkage factor — MD (%) | 1.0 | 1.0 | 1.5 | 1.0 | 1.0 | 1.5 | 1.5 |
| | 130°C heat shrinkage factor — TD (%) | 1.0 | 1.0 | 1.5 | 1.0 | 1.0 | 1.5 | 1.5 |
| | 150°C heat shrinkage factor — MD (%) | 1.0 | 2.0 | 2.0 | 1.0 | 2.0 | 3.0 | 2.0 |
| | 150°C heat shrinkage factor — TD (%) | 1.0 | 2.0 | 2.0 | 1.0 | 2.0 | 3.0 | 2.0 |
| Battery evaluation | Nail penetration test | A | A | A | A | A | A | A |
| | Cycle test | A | A | B | A | A | A | A |

[Table 2]

| | | | Example 8 | Example 9 | Example 10 | Example 11 | Example 12 | Example 13 | Example 14 | Example 15 |
|---|---|---|---|---|---|---|---|---|---|---|
| Constituent features and properties of PO microporous membrane | PE amount | (%) | 93 | 93 | 93 | 93 | 93 | 93 | 100 | 93 |
| | PP amount | (%) | 7 | 7 | 7 | 7 | 7 | 7 | 0 | 7 |
| | MI | (g/10 min) | 0.47 | 0.47 | 0.47 | 0.47 | 0.47 | 0.47 | 0.15 | 0.47 |
| | Thickness | ($\mu$m) | 12 | 12 | 12 | 12 | 12 | 12 | 9 | 9 |
| | Porosity | (%) | 42 | 42 | 42 | 42 | 42 | 42 | 39 | 37 |
| | Air permeability | (sec/100 cm$^3$) | 150 | 150 | 150 | 150 | 150 | 150 | 125 | 160 |
| | Puncture strength | (gf) | 500 | 500 | 500 | 500 | 500 | 500 | 480 | 340 |
| | Basis weight-equivalent puncture strength | (gf/(g/m$^2$)) | 76 | 76 | 76 | 76 | 76 | 76 | 98 | 62 |
| | Inorganic particle type | | Boehmite | Boehmite | Boehmite | Alumina | Barium sulfate | Barium sulfate | Boehmite | Boehmite |
| | Inorganic particle form | | Block | Block | Laminar | Spherical | Granular | Granular | Block | Block |
| | Inorganic particle diameter | $D_{50}$ ($\mu$m) | 0.55 | 0.55 | 0.62 | 0.60 | 0.25 | 0.25 | 0.55 | 0.55 |
| | Inorganic particle specific surface area | (m$^2$/g) | 7.0 | 7.0 | 6.2 | 6.5 | 12.0 | 12.0 | 7.0 | 7.0 |
| | Dispersing agent addition | (parts by weight) | 0.4 | 0.4 | 0.4 | 0.6 | 0.6 | 0.4 | 0.4 | 0.4 |
| | Bead diameter | (mm) | 0.1 | 0.1 | 0.1 | 0.1 | 0.1 | 0.1 | 0.1 | 0.1 |
| | Mill rotational speed | (rpm) | 3300 | 3300 | 3300 | 2000 | 2000 | 2000 | 3300 | 3300 |
| | Binder polymer type | | Acrylic latex | Acrylic latex | Acrylic latex | Acrylic latex | Acrylic latex | Acrylic latex | Acrylic latex | Acrylic latex |

| | | | Example 8 | Example 9 | Example 10 | Example 11 | Example 12 | Example 13 | Example 14 | Example 15 |
|---|---|---|---|---|---|---|---|---|---|---|
| Constituent features and properties of porous layer | Binder polymer addition amount | (parts by weight) | 7.9 | 9.4 | 3.8 | 2.9 | 1.9 | 1.9 | 3.8 | 3.8 |
| | Inorganic particle diameter in coating solution | $D_{10}$ ($\mu$m) | 0.22 | 0.22 | 0.36 | 0.24 | 0.11 | 0.11 | 0.22 | 0.22 |
| | | D50 ($\mu$m) | 0.42 | 0.42 | 0.57 | 0.45 | 0.20 | 0.20 | 0.42 | 0.42 |
| | | $D_{90}$ ($\mu$m) | 0.68 | 0.68 | 1.05 | 1.10 | 0.50 | 0.50 | 0.68 | 0.68 |
| | Coating solution viscosity | (mPa·sec) | 120 | 130 | 130 | 120 | 120 | 120 | 120 | 120 |
| | Inorganic particle content of porous layer | (%) | 91.5 | 90.0 | 95.6 | 96.3 | 97.3 | 97.5 | 95.6 | 95.6 |
| | Porous layer thickness | ($\mu$m) | 3.0 | 3.0 | 3.0 | 2.0 | 2.0 | 1.5 | 3.0 | 1.0 |
| | Number of holes S | (number) | 83 | 90 | 72 | 105 | 144 | 155 | 90 | 110 |
| | Percentage T | (%) | 96 | 95 | 93 | 100 | 100 | 100 | 96 | 96 |
| | Inorganic particle aspect ratio | | 1.8 | 1.8 | 2.5 | 1.3 | 1.4 | 1.4 | 1.8 | 1.8 |
| | Porous layer density | (g/m²·$\mu$m) | 1.51 | 1.45 | 1.50 | 1.80 | 2.50 | 2.51 | 1.71 | 1.55 |
| Multilayer porous membrane properties | Thickness | ($\mu$m) | 15 | 15 | 15 | 14 | 14 | 13.5 | 15 | 13 |
| | Air permeability | (sec/100 cm³) | 195 | 200 | 165 | 165 | 175 | 167 | 140 | 168 |
| | Air permeability ratio of multilayer porous membrane with respect to PO microporous membrane | | 1.30 | 1.33 | 1.10 | 1.10 | 1.17 | 1.11 | 1.12 | 1.05 |
| | 130°C heat shrinkage factor | MD (%) | 1.8 | 2.0 | 2.0 | 1.0 | 1.0 | 1.5 | 1.0 | 2.0 |
| | | TD (%) | 1.6 | 2.0 | 2.0 | 1.0 | 1.0 | 1.5 | 1.0 | 2.0 |
| | 150°C heat shrinkage factor | MD (%) | 3.0 | 5.0 | 4.0 | 1.0 | 1.0 | 2.0 | 1.0 | 4.0 |
| | | TD (%) | 3.0 | 5.0 | 4.0 | 1.0 | 1.0 | 2.0 | 1.0 | 4.0 |

(continued)

| | | Example 8 | Example 9 | Example 10 | Example 11 | Example 12 | Example 13 | Example 14 | Example 15 |
|---|---|---|---|---|---|---|---|---|---|
| Battery evaluation | Nail penetration test | A | A | A | A | A | A | A | A |
| | Cycle test | A | B | A | A | A | A | A | A |

[Table 3]

| | | | Comp. Example 1 | Comp. Example 2 | Comp. Example 3 | Comp. Example 4 | Comp. Example 5 | Comp. Example 6 |
|---|---|---|---|---|---|---|---|---|
| Constituent features and properties of PO microporous membrane | PE amount | (%) | 93 | 93 | 93 | 93 | 93 | 93 |
| | PP amount | (%) | 7 | 7 | 7 | 7 | 7 | 7 |
| | MI | (g/10 min) | 0.47 | 0.47 | 0.47 | 0.47 | 0.47 | 0.47 |
| | Thickness | ($\mu$m) | 12 | 12 | 12 | 12 | 12 | 12 |
| | Porosity | (%) | 42 | 42 | 42 | 42 | 42 | 42 |
| | Air permeability | (sec/100 cm$^3$) | 150 | 150 | 150 | 150 | 150 | 150 |
| | Puncture strength | (gf) | 500 | 500 | 500 | 500 | 500 | 500 |
| | Basis weight-equivalent puncture strength | (gf/(g/m$^2$)) | 76 | 76 | 76 | 76 | 76 | 76 |
| | Inorganic particle type | | Boehmite | Boehmite | Calcined kaolin | Boehmite | Alumina | Boehmite |
| | Inorganic particle form | | Block | Block | Scaly | Block | Spherical | Block |
| | Inorganic particle diameter | D50 ($\mu$m) | 0.83 | 1.45 | 2.12 | 0.34 | 0.03 | 0.55 |
| | Inorganic particle specific surface area | (m$^2$/g) | 5.1 | 3.8 | 20.5 | 15.0 | 25.0 | 7.0 |
| | Dispersing agent addition | (parts by weight) | 0.4 | 0.4 | 0.4 | 0.1 | 0.5 | 0.4 |
| | Bead diameter | (mm) | 0.1 | 0.1 | 0.1 | 0.1 | Untreated | 0.1 |
| | Mill rotational speed | (rpm) | 2000 | 2000 | 2000 | 2000 | Untreated | 3300 |
| | Binder polymer type | | Acrylic latex | Acrylic latex | Acrylic latex | Acrylic latex | Acrylic latex | Acrylic latex |
| | Binder polymer addition amount | (parts by weight) | 3.8 | 3.8 | 4.7 | 6.5 | 6.5 | 14.4 |

(continued)

| | | | Comp. Example 1 | Comp. Example 2 | Comp. Example 3 | Comp. Example 4 | Comp. Example 5 | Comp. Example 6 |
|---|---|---|---|---|---|---|---|---|
| Constituent features and properties of porous layer | Inorganic particle diameter in coating solution | $D_{10}$ ($\mu$m) | 0.51 | 0.60 | 0.98 | 0.25 | 0.01 | 0.22 |
| | | D50 ($\mu$m) | 0.75 | 1,02 | 1.91 | 0.55 | 0.03 | 0.42 |
| | | $D_{90}$ ($\mu$m) | 1.35 | 1.78 | 4.90 | 2.50 | 0.50 | 0.68 |
| | Coating solution viscosity | (mPa·sec) | 120 | 120 | 120 | 300 | 160 | 120 |
| | Inorganic particle content of porous layer | (%) | 95.6 | 95.6 | 94.7 | 93.2 | 92.9 | 85.0 |
| | Porous layer thickness | ($\mu$m) | 3.0 | 3.0 | 3.0 | 3.0 | 3.0 | 3.0 |
| | Number of holes S | (number) | 46 | 25 | 95 | 90 | 45 | 108 |
| | Percentage T | (%) | 92 | 81 | 93 | 85 | 100 | 98 |
| | Inorganic particle aspect ratio | | 2.0 | 2.2 | 10.5 | 1.8 | 1.2 | 1.8 |
| | Porous layer density | (g/m$^2$·$\mu$m) | 1.40 | 1.29 | 0.88 | 1.21 | 1.81 | 1.40 |
| Multilayer porous membrane properties | Thickness | ($\mu$m) | 15 | 15 | 15 | 15 | 15 | 15 |
| | Air permeability | (sec/100 cm$^3$) | 160 | 158 | 155 | 160 | 210 | 245 |
| | Air permeability ratio of multilayer porous membrane with respect to PO microporous membrane | | 1.07 | 1.05 | 1.03 | 1.07 | 1.40 | 1.63 |
| | 130°C heat shrinkage factor | MD (%) | 6.0 | 5.0 | 10.0 | 6.0 | 3.0 | 3.0 |
| | | TD (%) | 4.0 | 5.0 | 4.0 | 4.0 | 3.0 | 3.0 |
| | 150°C heat shrinkage factor | MD (%) | >50 | >50 | >50 | >50 | 5.0 | >50 |
| | | TD (%) | >50 | >50 | >50 | >50 | 5.0 | >50 |
| Battery evaluation | Nail penetration test | | B | C | C | C | A | B |
| | Cycle test | | A | A | A | A | C | C |

EP 3 998 155 B1

32

<Test Series II (for embodiment 2)> (not in accordance with the invention as claimed)

Testing and evaluation methods

<400°C Solder test>

The following measuring apparatuses and instruments were used.

(1) High output miniature temperature-controlled soldering iron

MODEL FM-202 by Hakko Corp. (Discontinued, but Model FM-203 may be used as an alternative)
Iron section: Model FM-2027
Iron tip: Model T7-C1
Cleaning sponge: Model A1519
Fig. 7 is a schematic diagram showing the form of the soldering iron. The tip of the soldering iron (20) is a circular column with a diameter of 1 mm, the tip being cut at an oblique angle of 60° with respect to the central axis of the circular column.

(2) Stage

Automatic direct action X-axis stage by Suruga Seiki Co., Ltd., X-axis linear ball guide
Model PG430-L05AG (C/N 120300125)
With mounted unit motor by Oriental Motor Co., Ltd.

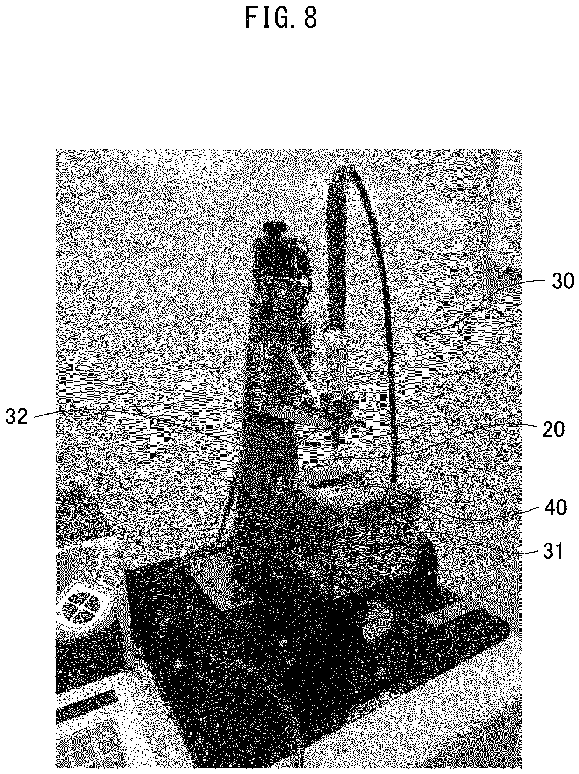

Fig. 8 is a diagram showing the outer appearance of the stage. The stage (30) has a sample stand (31) with adjustable and fixable vertical height. At the center top of the sample stand, the stage has a soldering iron holder (32) that holds the soldering iron (20) vertically downward.

(3) AC100 V stepping motor controller

Model DS102 by Suruga Seiki Co., Ltd.
The controller is provided with a Model DT100 Handy Terminal, the Handy Terminal allowing operation of the soldering iron holder of the stage in the vertical direction. The controller is programmed to lower the soldering iron holder (i.e. the soldering iron) 30 mm at a speed of 10 mm/sec, holding it at the lowermost point for 3 seconds, and then to raise it back to the original position at a speed of 10 mm/sec.

(4) Sample holder

The sample holder used consisted of two metal frames of the following size.
Metal frame outer dimensions: 50 mm × 60 mm
Inner dimensions: 30 mm × 40 mm
The sample holder can be mounted and fixed to the sample stand of the stage.

A 400°C solder test was conducted by the following procedure.
The test was carried out under conditions in a measuring environment of 25°C ±5°C, 40 ±10% relative humidity, and in a location unaffected by wind.
The tip of the soldering iron is wiped with an ethanol-wetted Kimwipe or swab, using a pincette.
The soldering iron is connected to a temperature-elevating device to raise the temperature to 400°C. Upon reaching 400°C it is allowed to stand for 90 seconds or longer until the temperature stabilizes.
The multilayer porous membrane is cut out to match the outer dimensions of the sample holder and sandwiched between two sample holders without wrinkling of the sample, and the four corners are anchored with clips (not shown).
The controller power source is activated and the soldering iron holder is operated with the Handy Terminal, raising the tip of the soldering iron to the top.
When the soldering iron has been lowered to the lowermost point, the height of the sample stand of the stage is adjusted to a position so that the soldering iron pierces the multilayer porous membrane up to a location 5 mm from the tip of the soldering iron.
The multilayer porous membrane clamped by the sample holder is set at the center of the sample stand and fixed.
Fig. 9 is a schematic diagram showing the state of the soldering iron before piercing the multilayer porous membrane. The scale of the schematic diagram is not exact, the distance from the multilayer porous membrane to the tip of the soldering iron being 25 mm.

The Handy Terminal is operated with a pre-programmed soldering iron operation: 30 mm lowering at a speed of 10 mm/sec, holding for 3 seconds at the lowermost point, and raising again to the original position at a speed of 10 mm/sec.

Fig. 10 is a schematic diagram showing the state of the soldering iron after piercing the multilayer porous membrane. The scale of the schematic diagram is not exact, and when the soldering iron is at its lowermost point, the soldering iron pierces the multilayer porous membrane to a position 5 mm from the tip of the soldering iron. A hole (11) is formed in the multilayer porous membrane by the soldering iron and by the heat of the soldering iron. In some cases the heat of the soldering iron causes formation of a colored section (12) with deformed pores around the hole periphery.

After one operation with the soldering iron, the sample is removed from the sample stand and cooled to room temperature.

(Image processing method)

(1) Image acquisition

The sample that has been subjected to 400°C solder testing is scanned using the scanner function of a "RICOH MP C5503" (product of Ricoh Co., Ltd.). The sample is directly set on the document glass while taking care not to create folds or wrinkles in the sample, and a metal ruler is placed next to the sample to indicate the scale. Black drawing paper ("Fresh Color C-55 recycled drawing paper" by Daio Paper Corporation) is placed over it as a background, the document cover is closed, and scanning is initiated after setting the scanning conditions to "full color: character, photograph", the resolution to "600 dpi" and the file format to "JPEG", to obtain an electronic image of the sample.

(2) Calculation of area

The obtained sample electronic image is used to calculate the open hole area (S) from the 400°C solder test. The area S is calculated by the following method using "ImageJ"(ver.1.50i) image processing software.

After clicking "File" -> "Open", the sample electronic image of interest is selected and the file is opened, and the straight line tool "Straight" is used to measure the distance between scale lines on the metal ruler in the image as a "Known Distance". After next opening "Analyze" → "Set Scale", the distance (number of pixels) selected by the straight line selection tool is displayed as "Distance in pixels", and the "Known Distance" and "Unit of length" are inputted to set the scale.

Next, the rectangular region selection tool "Rectangular" is used to draw out a 4.5 mm-square region, the square region is dragged and moved to a location so that the interior of the square contains the area S, and "Image" -> "Crop" is clicked to extract an image of the selected region.

When drawing the 4.5 mm-square region, "Plugins", "Macros", "Record" may be clicked in that order to open the Recorder window, creating a macro whereby "makeRectangle (0, 0, X, X); " is inputted, "Create" is clicked, and a rectangular selection tool of the prescribed size is drawn, thereby facilitating the operation. The value of X in the input formula is the number of pixels in the image corresponding to 4.5 mm, calculated from the previously set scale value. When the number of pixels is a decimal, the inputted value is an integer value obtained by rounding the first decimal place.

The extracted image is then binarized. After first clicking "Image" -> "Type", the image is converted to 8 bit and "Image", "Adjust", "Threshold" are clicked to set the threshold. For calculation of the area S, the algorithm is set to "Default", the threshold minimum is set to "0" and the maximum is determined by the following method.

In the brightness histogram displayed by this procedure, the tone is raised in increments of 1 from the peak top of the peak at the end closer to a tone of "0" (closer to black), and the point at which the cumulative (%) change displayed at the bottom of the brightness histogram first reaches 0.3% or lower is recorded as the maximum for the threshold of the open hole area (S).

When the peak is difficult to ascertain by this procedure, "Analyze" -> "Histogram" is clicked to display the histogram separately, and if necessary "Log" is clicked to change the display, allowing a peak detection reference to be obtained. After determining the maximum for the area (S) threshold in this manner, "Apply" is clicked to obtain each binarized image.

The tone is lowered in increments of 1 from the peak top of the peak at the end closer to a tone of "255" (closer to white) in the brightness histogram, and the point at which the cumulative (%) change displayed at the bottom of the brightness histogram first reaches 0.1% or lower can be used as the maximum for the threshold for the open hole area and total colored section area.

Two continuous peaks may be present depending on the state of the sample, making it impossible to select a proper threshold by this method, in which case the lowermost valley of each peak is used as the threshold for each.

Finally, the open hole area S is calculated from the obtained binarized image, by the following procedure.

After selecting "Set Measurements..." from "Analyze", the boxes of "Area", "Shape descriptors" and "Fit ellipse" are all checked and "OK" is pressed, after which "Analyze Particles..." is selected from "Analyze".

A value of "1" is inputted in the "Size (mm²)" column, "Outlines" is selected from the "Show" column, the boxes of "Display results", "Clear results", "Exclude on edges" and "Include holes" are all checked and "OK" is clicked, to obtain the calculated results for area S and aspect ratio. The area is displayed in the "Area" column of the analysis results, and the calculated results for the aspect ratio are displayed in the "AR" column of the analysis results.

<Viscosity-average molecular weight (Mv)>

The limiting viscosity [η] (dl/g) at 135°C in a decalin solvent was determined based on ASTM-D4020.

The Mv for the polyethylene and polyolefin microporous membrane were calculated by the following formula.

$$[\eta] = 6.77 \times 10^{-4} \, \text{Mv}^{0.67}$$

For polypropylene, the Mv was calculated by the following formula.

$$[\eta] = 1.10 \times 10^{-4} \, \text{Mv}^{0.80}$$

<Melt index (MI) (g/10 minutes) of polyolefin microporous membrane>

The MI of the sample was measured in the same manner as Test Series I.

<Film thickness (μm)>

A "KBM™" microthickness meter by Toyo Seiki Co., Ltd. was used to measure the thicknesses of the polyolefin microporous membrane or multilayer porous layer, and of a membrane with the first porous layer alone coated, at room temperature (23 ±2°C), and the coating thicknesses of the first porous layer and second porous layer were calculated from these thicknesses. The cross-sectional SEM image may also be used to measure the thickness of each layer, as values by detection using a product by a different manufacturer.

<Porosity (%)>

A 10 cm × 10 cm-square sample was cut out from the microporous membrane, and its volume (cm³) and mass (g) were determined and used together with the membrane density (g/cm³) by the following formula, to obtain the porosity.

$$\text{Porosity (\%)} = (\text{Volume - mass/density})/\text{volume} \times 100$$

<Air permeability (sec/100 cm³)>

The air permeability of the sample was measured in the same manner as Test Series I.

<Puncture strength (gf) and basis weight-equivalent puncture strength (gf/(g/m²))>

The puncture strength of the sample was measured in the same manner as Test Series I, and the basis weight-equivalent puncture strength was also calculated.

<TMA maximum shrinkage stress (gf)>

The shrinkage stress of the sample was measured using a TMA50™ by Shimadzu Corp. When measuring the value in the MD (or TD) direction, the sample cut out to a width of 3 mm in the TD (or MD) was anchored to a chuck with a chuck distance of 10 mm, and set in a dedicated probe. With an initial load of 1.0 g and in fixed-length measuring mode, the sample was heated from 30°C to 200°C at a temperature-elevating rate of 10°C/min, the load (gf) generated at that time was measured. Measurement was performed in both the MD and TD, and the maximum load was recorded as the maximum thermal shrinkage stress (gf) for each.

<Mean particle size and particle size distribution of inorganic particles>

The particle size distribution, $D_{50}$ and $D_{90}$ of the sample were measured in the same manner as Test Series I.

<Heat shrinkage factor (%) at 150°C>

The multilayer porous membrane as the sample was cut out to 100 mm in the MD direction and 100 mm in the TD direction, and allowed to stand for 1 hour in an oven at 150°C. During this time, the sample was sandwiched between two sheets of paper so as to avoid direct contact of the sample with warm air. After removing the sample from the oven and cooling it, the length (mm) was measured and the heat shrinkage factor was calculated by the following formula. Measurement was in the MD direction and TD direction, with the larger value being recorded as the heat shrinkage factor.

$$\text{Heat shrinkage factor } (\%) = \{(100 - \text{length after heating})/100\} \times 100$$

<Nail penetration test>

A nail penetration test was carried out and the test results were evaluated, in the same manner as Test Series I.

<Impact test>

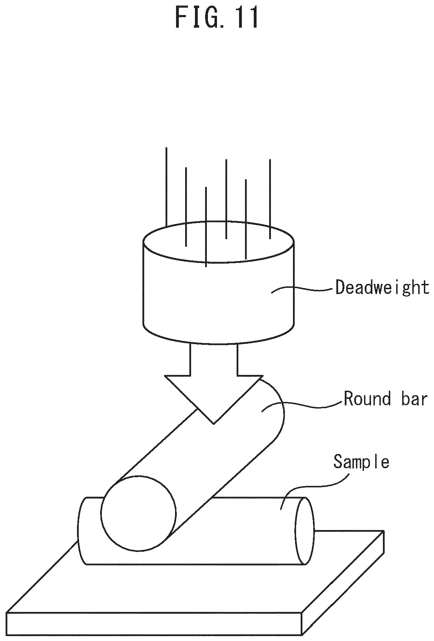

Fig. 11 is a schematic diagram illustrating an impact test.
In impact testing, a round bar ($\varphi$ = 15.8 mm) was set on a sample disposed on a test stand, so that the sample and the round bar were generally perpendicular, and an 18.2 kg deadweight was dropped onto the top surface of the round bar from a position at a height of 61 cm from the round bar, to observe the effect of impact on the sample.
The procedure for the impact test will now be described with reference to Fig. 11.
The laminated lithium ion secondary battery assembled as described in <Nail penetration test> above and selected for evaluation was used for 3 hours of constant current, constant voltage (CCCV) charging under conditions with a current value of 3000 mA (1.0 C) and a final cell voltage of 4.2 V.
Next, in an environment of 25°C, the battery was placed sideways on a flat surface, and a stainless steel round bar with a diameter of 15.8 mm was placed at the center of the battery, crossing the battery. The round bar was disposed so that the long axis was parallel to the lengthwise direction of the separator. An 18.2 kg deadweight was dropped from a height of 61 cm so that an impact perpendicular to the long axial direction of the battery was produced from the round bar disposed at the center of the battery. Following impact, the surface temperature of the battery was measured. The test was conducted for 5 cells at a time, and evaluation was made on the following scale. Scores of A (satisfactory) and B (acceptable) were passing levels in the evaluation. The surface temperature of the battery is the temperature measured with a thermocouple (K-seal type) at a position 1 cm from the bottom side of the exterior of the battery.

A: Surface temperature increase of ≤30°C for all cells.
B: Some cells with surface temperature of >30°C and ≤100°C, but surface temperature of ≤100°C for all cells.
C: One or more cells with surface temperature of > 100°C.
D: One or more cells with ignition.

<Rate property and cycle test>

A rate property evaluation test and cycle test were carried out in the same manner as Test Series I, except that the evaluation scale for the cycle test was changed as follows.

(Evaluation scale for cycle characteristic in Test Series II)

A: Capacity retention of ≥70%.
B: Capacity retention of ≥65% and <70%.
C: Capacity retention of ≥60% and <65%.
D: Capacity retention of <60%.

[Example II-1]

A tumbler blender was used to form a polymer blend with a polyethylene (PE) content of 93% and a polypropylene (PP) content of 7%, as shown in Table 4. To 99 parts by weight of the polymer blend there was added 1 part by weight of pentaerythrityl-tetrakis-[3-(3,5-di-t-butyl-4-hydroxyphenyl)propionate] as an antioxidant, and a tumbler blender was again used for dry blending to obtain a polymer mixture. The obtained polymer mixture was substituted with nitrogen and then supplied to a twin-screw extruder using a feeder under a nitrogen atmosphere. Also, liquid paraffin (kinematic viscosity at 37.78°C: $7.59 \times 10^{-5}$ m²/s) was injected into the extruder cylinder by a plunger pump.

The mixture was melt kneaded with adjustment of the feeder and pump for a liquid paraffin quantity ratio of 62 weight% in the total extruded mixture (resin composition concentration of 38 weight %). The melt kneading conditions were a preset temperature of 200°C, a screw rotational speed of 100 rpm and a discharge throughput of 230 kg/h.

The melt kneaded mixture was then extrusion cast through a T-die onto a cooling roll controlled to a surface temperature of 25°C, to obtain a gel sheet with a thickness of 1700 $\mu$m.

The gel sheet was then simultaneously fed into a biaxial tenter stretching machine for biaxial stretching. The stretching conditions were an MD factor of 7.0, a TD factor of 6.38 and a preset temperature of 123°C. It was then fed into a methylene chloride tank and thoroughly immersed in the methylene chloride for extraction removal of the liquid paraffin, after which the methylene chloride was dried off to obtain a porous body.

The porous body was fed to a TD tenter and heat set. The heat setting temperature was 125°C, the maximum TD factor was 1.47 and the relaxation factor was 0.864, to obtain a polyolefin microporous membrane with a thickness of 12 $\mu$m.

The surface of the polyolefin microporous membrane was subjected to corona discharge treatment. As shown in Table 4, 95.0 parts by weight of aluminum hydroxide oxide (boehmite, block-shaped, D50 = 0.25 $\mu$m, $D_{90}$ = 0.49 $\mu$m), 4.0 parts by solid weight of an acrylic latex (solid concentration: 40%, mean particle size: 145 nm), and 1.0 part by solid weight of an aqueous ammonium polycarboxylate solution (SN dispersant 5468 by San Nopco, Ltd.) were homogeneously dispersed in 100 parts by weight of water to obtain a coating solution, and after using a gravure coater to coat the coating solution onto the treated surface of the polyolefin microporous membrane, it was dried at 60°C to remove the water, and a first porous layer with a coating thickness of 3 $\mu$m and a porosity of 50% was formed on one side of the polyolefin microporous membrane, while a second porous layer with a coating thickness of 1 $\mu$m and a porosity of 50% was formed on the other side of the polyolefin microporous membrane, with corona treatment in the same manner, to obtain a multilayer porous membrane. The obtained multilayer porous membrane had a total thickness of 16.0 $\mu$m, an air permeability of 170 sec/100 cm³ and a heat shrinkage factor of 1.5% at 150°C. Table 4 shows the evaluation results for a battery comprising the multilayer porous membrane as a separator.

Examples II-2 to II-27 and Comparative Examples II-1 to 11-31

Multilayer porous membranes were formed in the same manner as Example II-1, except that the starting material compositions and physical properties of the polyolefin microporous membranes, and the starting material types and coating conditions for the first or second porous layers, were set as shown in Tables 4 to 9. In Comparative Example II-1 and Comparative Example II-3, a porous layer was disposed only on one side of the PO microporous membrane. The properties of the obtained multilayer porous membranes and batteries comprising them as separators were evaluated by the method described above. The evaluation results are shown in Tables 4 to 9.

[Example II-28]

After mixing 80 parts by weight of an adhesive resin (acrylic polymer, glass transition temperature: 90°C, mean particle size: 380 nm, electrolyte solution swelling degree: 2.8) and 20 parts by weight of an adhesive resin with a different glass transition temperature (acrylic polymer, glass transition temperature: -6°C, mean particle size: 132 nm, electrolyte solution swelling degree: 2.5), ion-exchanged water was added to prepare an adhesive resin-containing coating solution (adhesive resin concentration: 3 weight%). A gravure coater was used to coat the mixture in a dotted fashion onto the surface of the polyolefin microporous membrane comprising the porous layer of Example II-1. It was then dried at 60°C to remove the water. The other side was also coated with a coating solution and dried in the same manner, to obtain a separator having an adhesive layer with an adhesive resin weight of 0.2 g/m², a surface coverage of 30%, a dot average long diameter of 50 $\mu$m and a thickness of 0.5 $\mu$m. The evaluation results are listed in Table 9.

[Table 4]

| | | Example II-1 | Example II-2 | Example II-3 | Example II-4 | Example II-5 |
|---|---|---|---|---|---|---|
| Polyolefin microporous membrane | PE amount (%) | 93 | 93 | 93 | 93 | 93 |
| | PP amount (%) | 7 | 7 | 7 | 7 | 7 |
| | MI (g/10 min) | 0.27 | 0.27 | 0.27 | 0.27 | 0.27 |
| | Thickness ($\mu$m) | 12 | 12 | 12 | 12 | 12 |
| | Porosity (%) | 47.5% | 47.5% | 47.5% | 47.5% | 47.5% |
| | Air permeability (sec/100 cm$^3$) | 130 | 130 | 130 | 130 | 130 |
| | Puncture strength (gf) | 500 | 500 | 500 | 500 | 500 |
| | Basis weight-equivalent puncture strength (gf/(g/m$^2$)) | 83 | 83 | 83 | 83 | 83 |
| | TM A maximum shrinkage stress (gf) | 5.1 | 5.1 | 5.1 | 5.1 | 5.1 |
| First porous layer | Inorganic particle material | Boehmite | Boehmite | Boehmite | Boehmite | Boehmite |
| | Inorganic particle form | Block | Block | Block | Block | Block |
| | Binder polymer type | Acrylic latex | Acrylic latex | Acrylic latex | Acrylic latex | Acrylic latex |
| | Inorganic particle diameter D50 ($\mu$m) | 0.25 | 0.25 | 0.25 | 0.25 | 0.25 |
| | Inorganic particle diameter D90 ($\mu$m) | 0.49 | 0.49 | 0.49 | 0.49 | 0.49 |
| | Porous layer porosity (%) | 50% | 50% | 50% | 50% | 50% |
| | Porous layer thickness ($\mu$m) | 3 | 2 | 4 | 2 | 1.5 |
| Second porous layer | Inorganic particle material | Boehmite | Boehmite | Boehmite | Boehmite | Boehmite |
| | Inorganic particle form | Block | Block | Block | Block | Block |
| | Binder polymer type | Acrylic latex | Acrylic latex | Acrylic latex | Acrylic latex | Acrylic latex |
| | Inorganic particle diameter D50 ($\mu$m) | 0.25 | 0.25 | 0.25 | 0.25 | 0.25 |
| | Inorganic particle diameter D90 ($\mu$m) | 0.49 | 0.49 | 0.49 | 0.49 | 0.49 |
| | Porous layer porosity (%) | 50% | 50% | 50% | 50% | 50% |
| | Porous layer thickness ($\mu$m) | 1 | 2 | 1 | 1 | 1.5 |
| Multilayer porous membrane | Total thickness ($\mu$m) | 16.0 | 16.0 | 17.0 | 15.0 | 15.0 |
| | Air permeability (sec/100 cm$^3$) | 170 | 170 | 180 | 160 | 160 |
| | Heat shrinkage factor (%) @ 150°C | 1.5% | 1.8% | 0.5% | 4.0% | 4.9% |

(continued)

| | | Example II-1 | Example II-2 | Example II-3 | Example II-4 | Example II-5 |
|---|---|---|---|---|---|---|
| 400°C Solder test | Open hole area (mm$^2$) when inserted from first porous layer side | 5.8 | 5.7 | 4.8 | 6.8 | 6.8 |
| | Open hole area (mm$^2$) when inserted from second porous layer side | 5.5 | 5.7 | 2.5 | 6.4 | 6.8 |
| | First porous layer side/second porous layer side area ratio | 1.05 | 1.00 | 1.92 | 1.06 | 1.00 |
| Battery evaluation | Nail penetration test | A | A | B | A | A |
| | Impact test | A | A | A | A | A |
| | Rate test | B | B | B | A | A |
| | Cycle test | A | B | B | B | B |

[Table 5]

| | | Example II-6 | Example II-7 | Example II-8 | Example II-9 | Example II-10 |
|---|---|---|---|---|---|---|
| Polyolefin microporous membrane | PE amount (%) | 93 | 93 | 93 | 93 | 93 |
| | PP amount (%) | 7 | 7 | 7 | 7 | 7 |
| | MI (g/10 min) | 0.27 | 0.27 | 0.27 | 0.27 | 0.27 |
| | Thickness ($\mu$m) | 12 | 12 | 12 | 12 | 12 |
| | Porosity (%) | 47.5% | 47.5% | 47.5% | 47.5% | 47.5% |
| | Air permeability (sec/100 cm$^3$) | 130 | 130 | 130 | 130 | 130 |
| | Puncture strength (gf) | 500 | 500 | 500 | 500 | 500 |
| | Basis weight-equivalent puncture strength (gf/(g/m$^2$)) | 83 | 83 | 83 | 83 | 83 |
| | TMA maximum shrinkage stress (gf) | 5.1 | 5.1 | 5.1 | 5.1 | 5.1 |
| First porous layer | Inorganic particle material | Boehmite | Boehmite | Boehmite | Boehmite | Boehmite |
| | Inorganic particle form | Block | Block | Block | Block | Laminar |
| | Binder polymer type | Acrylic latex | Acrylic latex | Acrylic latex | Acrylic latex | Acrylic latex |
| | Inorganic particle diameter D50 ($\mu$m) | 0.25 | 0.5 | 0.65 | 0.78 | 0.25 |
| | Inorganic particle diameter D90 ($\mu$m) | 0.49 | 0.95 | 1.22 | 1.95 | 0.60 |
| | Porous layer porosity (%) | 50% | 50% | 50% | 50% | 48% |
| | Porous layer thickness ($\mu$m) | 2.5 | 3 | 3 | 3 | 3 |

(continued)

|  |  | Example II-6 | Example II-7 | Example II-8 | Example II-9 | Example II-10 |
|---|---|---|---|---|---|---|
| Second porous layer | Inorganic particle material | Boehmite | Boehmite | Boehmite | Boehmite | Boehmite |
|  | Inorganic particle form | Block | Block | Block | Block | Laminar |
|  | Binder polymer type | Acrylic latex | Acrylic latex | Acrylic latex | Acrylic latex | Acrylic latex |
|  | Inorganic particle diameter D50 ($\mu$m) | 0.25 | 0.5 | 0.65 | 0.78 | 0.25 |
|  | Inorganic particle diameter D90 ($\mu$m) | 0.49 | 0.95 | 1.22 | 1.95 | 0.60 |
|  | Porous layer porosity (%) | 50% | 50% | 50% | 50% | 48% |
|  | Porous layer thickness ($\mu$m) | 0.5 | 1 | 1 | 1 | 1 |
| Multilayer porous membrane | Total thickness ($\mu$m) | 15.0 | 16.0 | 16.0 | 16.0 | 16.0 |
|  | Air permeability (sec/100 cm$^3$) | 160 | 165 | 165 | 165 | 175 |
|  | Heat shrinkage factor (%) @ 150°C | 3.7% | 4.0% | 8.0% | 45.0% | 1.2% |
| 400°C Solder test | Open hole area (mm$^2$) when inserted from first porous layer side | 8.4 | 7 | 7.9 | 9.3 | 5.2 |
|  | Open hole area (mm$^2$) when inserted from second porous layer side | 6.4 | 6.7 | 7.5 | 8.6 | 5 |
|  | First porous layer side/second porous layer side area ratio | 1.31 | 1.04 | 1.05 | 1.08 | 1.04 |
| Battery evaluation | Nail penetration test | B | A | B | B | A |
|  | Impact test | A | A | B | B | A |
|  | Rate test | A | B | B | B | B |
|  | Cycle test | B | A | A | A | B |

[Table 6]

| | | | Example II-11 | Example II-12 | Example II-13 | Example II-14 | Example II-15 |
|---|---|---|---|---|---|---|---|
| Polyolefin microporous membrane | | PE amount (%) | 93 | 93 | 93 | 93 | 93 |
| | | PP amount (%) | 7 | 7 | 7 | 7 | 7 |
| | | MI (g/10 min) | 0.27 | 0.27 | 0.27 | 0.27 | 0.27 |
| | | Thickness ($\mu$m) | 12 | 12 | 12 | 12 | 12 |
| | | Porosity (%) | 47.5% | 47.5% | 47.5% | 41.5% | 47.5% |
| | | Air permeability (sec/100 cm$^3$) | 130 | 130 | 130 | 165 | 130 |
| | | Puncture strength (gf) | 500 | 500 | 500 | 565 | 500 |
| | | Basis weight-equivalent puncture strength (gf/(g/m$^2$)) | 83 | 83 | 83 | 83 | 83 |
| | | TMA maximum shrinkage stress (gf) | 5.1 | 5.1 | 5.1 | 5.3 | 5.1 |
| First porous layer | | Inorganic particle material | Alumina | Barium sulfate | Boehmite | Boehmite | Boehmite |
| | | Inorganic particle form | Granular | Granular | Block | Block | Block |
| | | Binder polymer type | Acrylic latex | Acrylic latex | Acrylic latex | Acrylic latex | PVdF |
| | | Inorganic particle diameter D50 ($\mu$m) | 0.35 | 0.25 | 0.25 | 0.25 | 0.25 |
| | | Inorganic particle diameter D90 ($\mu$m) | 0.75 | 0.52 | 0.49 | 0.49 | 0.49 |
| | | Porous layer porosity (%) | 46% | 44% | 50% | 50% | 50% |
| | | Porous layer thickness ($\mu$m) | 3 | 3 | 3 | 3 | 3 |
| Second porous layer | | Inorganic particle material | Alumina | Barium sulfate | Barium sulfate | Boehmite | Boehmite |
| | | Inorganic particle form | Granular | Granular | Granular | Block | Block |
| | | Binder polymer type | Acrylic latex | Acrylic latex | Acrylic latex | Acrylic latex | PVdF |
| | | Inorganic particle diameter D50 ($\mu$m) | 0.35 | 0.25 | 0.25 | 0.25 | 0.25 |
| | | Inorganic particle diameter D90 ($\mu$m) | 0.75 | 0.52 | 0.52 | 0.49 | 0.49 |
| | | Porous layer porosity (%) | 46% | 44% | 44% | 50% | 50% |
| | | Porous layer thickness ($\mu$m) | 1 | 1 | 1 | 1 | 1 |
| Multilayer porous membrane | | Total thickness ($\mu$m) | 16.0 | 16.0 | 16.0 | 16.0 | 16.0 |
| | | Air permeability (sec/100 cm$^3$) | 175 | 180 | 175 | 205 | 190 |
| | | Heat shrinkage factor (%) @ 150°C | 2.0% | 1.0% | 1.2% | 2.5% | 2.5% |

(continued)

| | | Example II-11 | Example II-12 | Example II-13 | Example II-14 | Example II-15 |
|---|---|---|---|---|---|---|
| 400°C Solder test | Open hole area (mm$^2$) when inserted from first porous layer side | 6 | 5.2 | 5.2 | 5.8 | 7.5 |
| | Open hole area (mm$^2$) when inserted from second porous layer side | 5.9 | 4.9 | 5.3 | 5.5 | 7.2 |
| | First porous layer side/second porous layer side area ratio | 1.02 | 1.06 | 0.98 | 1.05 | 1.04 |
| Battery evaluation | Nail penetration test | A | A | A | A | B |
| | Impact test | A | A | A | A | A |
| | Rate test | B | B | B | C | C |
| | Cycle test | B | B | A | B | A |

[Table 7]

| | | Example II-16 | Example II-17 | Example II-18 | Example II-19 | Example II-20 |
|---|---|---|---|---|---|---|
| Polyolefin microporous membrane | PE amount (%) | 93 | 93 | 93 | 93 | 93 |
| | PP amount (%) | 7 | 7 | 7 | 7 | 7 |
| | MI (g/10 min) | 0.27 | 0.27 | 0.27 | 0.27 | 0.27 |
| | Thickness ($\mu$m) | 12 | 12 | 12 | 12 | 12 |
| | Porosity (%) | 41.5% | 52.0% | 47.5% | 47.5% | 47.5% |
| | Air permeability (sec/100 cm$^3$) | 165 | 100 | 130 | 130 | 130 |
| | Puncture strength (gf) | 565 | 450 | 600 | 450 | 400 |
| | Basis weight-equivalent puncture strength (gf/(g/m$^2$)) | 83 | 83 | 100 | 75 | 67 |
| | TMA maximum shrinkage stress (gf) | 5.1 | 5 | 5.4 | 4.2 | 3.8 |
| First porous layer | Inorganic particle material | Boehmite | Boehmite | Boehmite | Boehmite | Boehmite |
| | Inorganic particle form | Block | Block | Block | Block | Block |
| | Binder polymer type | Acrylic latex | Acrylic latex | Acrylic latex | Acrylic latex | Acrylic latex |
| | Inorganic particle diameter D50 ($\mu$m) | 0.25 | 0.25 | 0.25 | 0.25 | 0.25 |
| | Inorganic particle diameter D90 ($\mu$m) | 0.49 | 0.49 | 0.49 | 0.49 | 0.49 |
| | Porous layer porosity (%) | 50% | 50% | 50% | 50% | 50% |
| | Porous layer thickness ($\mu$m) | 2 | 3 | 3 | 3 | 3 |

(continued)

| | | Example II-16 | Example II-17 | Example II-18 | Example II-19 | Example II-20 |
|---|---|---|---|---|---|---|
| Second porous layer | Inorganic particle material | Boehmite | Boehmite | Boehmite | Boehmite | Boehmite |
| | Inorganic particle form | Block | Block | Block | Block | Block |
| | Binder polymer type | Acrylic latex | Acrylic latex | Acrylic latex | Acrylic latex | Acrylic latex |
| | Inorganic particle diameter D50 ($\mu$m) | 0.25 | 0.25 | 0.25 | 0.25 | 0.25 |
| | Inorganic particle diameter D90 ($\mu$m) | 0.49 | 0.49 | 0.49 | 0.49 | 0.49 |
| | Porous layer porosity (%) | 50% | 50% | 50% | 50% | 50% |
| | Porous layer thickness ($\mu$m) | 1 | 1 | 1 | 1 | 1 |
| Multilayer porous membrane | Total thickness ($\mu$m) | 16.0 | 16.0 | 16.0 | 16.0 | 16.0 |
| | Air permeability (sec/100 cm$^3$) | 195 | 140 | 170 | 170 | 170 |
| | Heat shrinkage factor (%) @ 150°C | 7.0% | 1.8% | 4.8% | 1.5% | 1.0% |
| 400°C Solder test | Open hole area (mm$^2$) when inserted from first porous layer side | 7.5 | 5.3 | 7.2 | 4 | 3.5 |
| | Open hole area (mm$^2$) when inserted from second porous layer side | 7.2 | 5 | 6.8 | 3.7 | 3.2 |
| | First porous layer side/second porous layer side area ratio | 1.04 | 1.06 | 1.06 | 1.08 | 1.09 |
| Battery evaluation | Nail penetration test | B | A | B | A | A |
| | Impact test | A | B | A | B | C |
| | Rate test | B | A | B | B | B |
| | Cycle test | B | A | A | A | A |

[Table 8]

| | | Example II-21 | Example II-22 | Example II-23 | Example II-24 | Example II-25 |
|---|---|---|---|---|---|---|
| Polyolefin microporous membrane | PE amount (%) | 93 | 93 | 93 | 93 | 100 |
| | PP amount (%) | 7 | 7 | 7 | 7 | 0 |
| | MI (g/10 min) | 0.27 | 0.27 | 0.27 | 0.27 | 0.8 |
| | Thickness ($\mu$m) | 12 | 8 | 8 | 6 | 12 |
| | Porosity (%) | 47.5% | 47.5% | 47.5% | 37.5% | 47.5% |
| | Air permeability (sec/100 cm$^3$) | 130 | 100 | 130 | 110 | 140 |
| | Puncture strength (gf) | 350 | 400 | 400 | 350 | 500 |
| | Basis weight-equivalent puncture strength (gf/(g/m$^2$)) | 58 | 100 | 100 | 100 | 83 |
| | TMA maximum shrinkage stress (gf) | 2.5 | 5.1 | 5.1 | 3.5 | 5.2 |
| First porous layer | Inorganic particle material | Boehmite | Boehmite | Boehmite | Boehmite | Boehmite |
| | Inorganic particle form | Block | Block | Block | Block | Block |
| | Binder polymer type | Acrylic latex | Acrylic latex | Acrylic latex | Acrylic latex | Acrylic latex |
| | Inorganic particle diameter D50 ($\mu$m) | 0.25 | 0.25 | 0.25 | 0.25 | 0.25 |
| | Inorganic particle diameter D90 ($\mu$m) | 0.49 | 0.49 | 0.49 | 0.49 | 0.49 |
| | Porous layer porosity (%) | 50% | 50% | 50% | 50% | 50% |
| | Porous layer thickness ($\mu$m) | 3 | 3 | 1 | 1 | 3 |
| Second porous layer | Inorganic particle material | Boehmite | Boehmite | Boehmite | Boehmite | Boehmite |
| | Inorganic particle form | Block | Block | Block | Block | Block |
| | Binder polymer type | Acrylic latex | Acrylic latex | Acrylic latex | Acrylic latex | Acrylic latex |
| | Inorganic particle diameter D50 ($\mu$m) | 0.25 | 0.25 | 0.25 | 0.25 | 0.25 |
| | Inorganic particle diameter D90 ($\mu$m) | 0.49 | 0.49 | 0.49 | 0.49 | 0.49 |
| | Porous layer porosity (%) | 50% | 50% | 50% | 50% | 50% |
| | Porous layer thickness ($\mu$m) | 1 | 1 | 1 | 1 | 1 |
| Multilayer porous membrane | Total thickness ($\mu$m) | 16.0 | 12.0 | 16.0 | 8.0 | 16.0 |
| | Air permeability (sec/100 cm$^3$) | 170 | 140 | 120 | 130 | 180 |
| | Heat shrinkage factor (%) @ 150°C | 1.0% | 0.8% | 9.5% | 2.5% | 2.0% |

(continued)

| | | Example II-21 | Example II-22 | Example II-23 | Example II-24 | Example II-25 |
|---|---|---|---|---|---|---|
| 400°C Solder test | Open hole area (mm$^2$) when inserted from first porous layer side | 2.8 | 2.5 | 7.8 | 5.6 | 6.9 |
| | Open hole area (mm$^2$) when inserted from second porous layer side | 2.6 | 2.3 | 7.8 | 5.4 | 6.7 |
| | First porous layer side/second porous layer side area ratio | 1.08 | 1.09 | 1.00 | 1.04 | 1.03 |
| Battery evaluation | Nail penetration test | A | A | B | A | B |
| | Impact test | D | B | B | B | A |
| | Rate test | B | A | A | A | B |
| | Cycle test | A | A | A | B | B |

[Table 9]

| | | Example II-26 | Example II-27 | Example II-28 | Comp. Example II-1 | Comp. Example II-2 | Comp. Example II-3 |
|---|---|---|---|---|---|---|---|
| Polyolefin microporous membrane | PE amount (%) | 81 | 93 | 93 | 93 | 93 | 93 |
| | PP amount (%) | 19 | 7 | 7 | 7 | 7 | 7 |
| | MI (g/10 min) | 0.2 | 0.56 | 0.47 | 0.47 | 0.47 | 0.47 |
| | Thickness ($\mu$m) | 12 | 12 | 12 | 12 | 12 | 12 |
| | Porosity (%) | 47.5% | 47.5% | 47.5% | 47.5% | 47.5% | 47.5% |
| | Air permeability (sec/100 cm$^3$) | 130 | 140 | 130 | 130 | 130 | 130 |
| | Puncture strength (gf) | 500 | 500 | 500 | 500 | 500 | 350 |
| | Basis weight-equivalent puncture strength (gf/(g/m$^2$)) | 83 | 83 | 83 | 83 | 83 | 58 |
| | TMA maximum shrinkage stress (gf) | 5 | 5 | 5.1 | 5.1 | 5.1 | 3.8 |

(continued)

| | | Example II-26 | Example II-27 | Example II-28 | Comp. Example II-1 | Comp. Example II-2 | Comp. Example II-3 |
|---|---|---|---|---|---|---|---|
| First porous layer | Inorganic particle material | Boehmite | Boehmite | Boehmite | Boehmite | Boehmite | Boehmite |
| | Inorganic particle form | Block | Block | Block | Block | Block | Block |
| | Binder polymer type | Acrylic latex | Acrylic latex | Acrylic latex | Acrylic latex | Acrylic latex | Acrylic latex |
| | Inorganic particle diameter D50 ($\mu$m) | 0.25 | 0.25 | 0.25 | 0.25 | 0.25 | 0.25 |
| | Inorganic particle diameter D90 ($\mu$m) | 0.49 | 0.49 | 0.49 | 0.49 | 0.49 | 0.49 |
| | Porous layer porosity (%) | 50% | 50% | 50% | 50% | 50% | 50% |
| | Porous layer thickness ($\mu$m) | 3 | 3 | 3 | 4 | 1 | 4 |
| Second porous layer | Inorganic particle material | Boehmite | Boehmite | Boehmite | - | Boehmite | - |
| | Inorganic particle form | Block | Block | Block | - | Block | - |
| | Binder polymer type | Acrylic latex | Acrylic latex | Acrylic latex | - | Acrylic latex | - |
| | Inorganic particle diameter D50 ($\mu$m) | 0.25 | 0.25 | 0.25 | - | 0.25 | - |
| | Inorganic particle diameter D90 ($\mu$m) | 0.49 | 0.49 | 0.49 | - | 0.49 | - |
| | Porous layer porosity (%) | 50% | 50% | 50% | - | 50% | - |
| | Porous layer thickness ($\mu$m) | 1 | 1 | 1 | - | 1 | - |
| Multilayer porous membrane | Total thickness ($\mu$m) | 16.0 | 16.0 | 16.0 | 16.0 | 15.0 | 16.0 |
| | Air permeability (sec/100 cm$^3$) | 170 | 170 | 170 | 170 | 140 | 170 |
| | Heat shrinkage factor (%) @ 150°C | 1.2% | 3.5% | 1.4% | 1.0% | 45.0% | 0.4% |

(continued)

|  |  | Example II-26 | Example II-27 | Example II-28 | Comp. Example II-1 | Comp. Example II-2 | Comp. Example II-3 |
|---|---|---|---|---|---|---|---|
| 400°C Solder test | Open hole area (mm$^2$) when inserted from first porous layer side | 5.1 | 6.5 | 5.7 | 14 | 10.1 | 10.2 |
| | Open hole area (mm$^2$) when inserted from second porous layer side | 4.8 | 5.9 | 5.4 | 5.4 | 9.8 | 2.4 |
| | First porous layer side/second porous layer side area ratio | 1.06 | 1.10 | 1.06 | 2.59 | 1.03 | 4.25 |
| Battery evaluation | Nail penetration test | A | B | A | D | C | C |
| | Impact test | A | A | A | A | A | D |
| | Rate test | B | B | B | B | A | B |
| | Cycle test | A | A | A | A | C | A |

<Test Series III (for embodiment 3)>

[Examples III-1 to III-4]

Multilayer porous membranes were formed in the same manner as Test Series II, except that the starting material compositions and physical properties of the polyolefin microporous membranes, and the starting material types and coating conditions for the first or second porous layers, were set as shown in Table 10. The polyolefin microporous membranes, porous layers and multilayer porous membranes were measured and evaluated in the same manner as Test Series I, 400°C solder testing of the multilayer porous membrane was carried out in the same manner as Test Series II, and the properties of batteries comprising the multilayer porous membranes as separators were measured and evaluated in the same manner as Test Series II.

[Table 10]

| | | Example III-1 | Example III-2 | Example III-3 | Example 111-4 |
|---|---|---|---|---|---|
| Polyolefin microporous membrane | PE amount (%) | 93 | 93 | 93 | 93 |
| | PP amount (%) | 7 | 7 | 7 | 7 |
| | MI (g/10 min) | 0.27 | 0.27 | 0.47 | 0.47 |
| | Thickness ($\mu$m) | 12 | 12 | 12 | 12 |
| | Porosity (%) | 47.5% | 47.5% | 42.0% | 42.0% |
| | Air permeability (sec/100 cm$^3$) | 130 | 130 | 150 | 150 |
| | Puncture strength (gf) | 500 | 500 | 500 | 500 |
| | Basis weight-equivalent puncture strength (gf/(g/m$^2$)) | 83 | 83 | 76 | 76 |
| | TMA maximum shrinkage stress (gf) | 5.1 | 5.1 | 4.0 | 4.0 |
| First porous layer | Inorganic particle material | Boehmite | Boehmite | Boehmite | Barium sulfate |
| | Inorganic particle form | Block | Block | Block | Granular |
| | Binder polymer type | Acrylic latex | Acrylic latex | Acrylic latex | Acrylic latex |
| | Inorganic particle diameter D50 ($\mu$m) | 0.22 | 0.25 | 0.42 | 0.20 |
| | Inorganic particle diameter D90 ($\mu$m) | 0.49 | 0.49 | 0.68 | 0.50 |
| | Porous laver porosity (%) | 50% | 50% | 48% | 44% |
| | Porous laver thickness ($\mu$m) | 2.0 | 1.5 | 1.5 | 1.0 |
| | Number of holes S (number) | 138 | 141 | 109 | 165 |
| | Percentage T (%) | 99 | 100 | 96 | 100 |
| | Inorganic particle aspect ratio | 1.7 | 1.7 | 1.8 | 1.4 |
| | Inorganic particle content of porous layer (%) | 95.0 | 95.0 | 95.6 | 973 |

(continued)

| | | Example III-1 | Example III-2 | Example III-3 | Example 111-4 |
|---|---|---|---|---|---|
| Second porous layer | Inorganic particle material | Boehmite | Boehmite | Boehmite | Barium sulfate |
| | Inorganic particle form | Block | Block | Block | Granular |
| | Binder polymer type | Acrylic latex | Acrylic latex | Acrylic latex | Acrylic latex |
| | Inorganic particle diameter D50 ($\mu$m) | 0.25 | 0.25 | 0.42 | 0.20 |
| | Inorganic particle diameter D90 ($\mu$m) | 0.49 | 0.49 | 0.68 | 0.50 |
| | Porous layer porosity (%) | 50% | 50% | 48% | 44% |
| | Porous layer thickness ($\mu$m) | 1.0 | 1.5 | 1.5 | 1.0 |
| | Number of holes S (number) | 148 | 141 | 109 | 165 |
| | Percentage T (%) | 100 | 100 | 96 | 100 |
| | Inorganic particle aspect ratio | 1.7 | 1.7 | 1.8 | 1.4 |
| | Inorganic particle content of porous layer (%) | 95 | 95 | 95.6 | 97.3 |
| Multilayer porous membrane | Total thickness ($\mu$m) | 15.0 | 15.0 | 15.0 | 14.0 |
| | Air permeability (sec/100 cm$^3$) | 160 | 160 | 165 | 175 |
| | Heat shrinkage factor (%) @ 150°C | 4.0% | 4.9% | 1.0% | 1.0% |
| 400°C Solder test | Open hole area (mm$^2$) when inserted from first porous layer side | 6.8 | 6.8 | 1.9 | 2.2 |
| | Open hole area (mm$^2$) when inserted from second porous layer side | 6.4 | 6.8 | 2.0 | 2.1 |
| | First porous layer side/second porous layer side area ratio | 1.06 | 1.00 | 0.95 | 1.05 |
| Battery evaluation | Nail penetration test | A | A | A | A |
| | Impact test | A | A | A | A |
| | Rate test | A | A | A | B |
| | Cycle test | B | B | A | B |

REFERENCE SIGNS LIST

10 Multilayer porous membrane

11 Hole

12 Colored section

20 Soldering iron

30 Stage

31 Sample stand

32 Soldering iron holder

40 Sample holder

## Claims

1. A multilayer porous membrane comprising a porous membrane that includes a polyolefin resin as a main component, and a porous layer that includes inorganic particles and a binder polymer, layered on at least one side of the porous membrane, wherein the total thickness of the porous layer is 0.5 $\mu$m or more and 3.0 $\mu$m or less, the number of holes with hole areas of 0.001 $\mu m^2$ or greater in the porous layer is 65 or more and 180 or less per 10 $\mu m^2$ visual field, the percentage of holes with areas in the range of 0.001 $\mu m^2$ to 0.05 $\mu m^2$ among holes with areas of 0.001 $\mu m^2$ or greater in the porous layer is 90% or greater, the percentage of inorganic particles occupying the porous layer is 90 weight% or more and 99 weight% or less, and an aspect ratio of the inorganic particles is 1.0 or more and 3.0 or less.

2. The multilayer porous membrane according to claim 1, wherein the layer density in the porous layer is 1.10 g/(m$^2$·$\mu$m) or more and 3.00 g/(m$^2$·$\mu$m) or less.

3. The multilayer porous membrane according to claim 1 or 2, wherein the mean particle size $D_{50}$ of the inorganic particles in the porous layer is 0.10 $\mu$m or more and 0.60 $\mu$m or less.

4. The multilayer porous membrane according to any one of claims 1 to 3, wherein the particle size $D_{90}$ of the inorganic particles in the porous layer is 0.30 $\mu$m or more and 1.20 $\mu$m or less.

5. The multilayer porous membrane according to any one of claims 1 to 4, wherein the ratio of the air permeability of the multilayer porous membrane with respect to the air permeability of the porous membrane is 1.0 or more and 1.6 or less.

6. The multilayer porous membrane according to any one of claims 1 to 5, wherein the basis weight-equivalent puncture strength of the porous membrane is 60 gf/(g/m$^2$) or greater.

7. The multilayer porous membrane according to any one of claims 1 to 6, wherein the air permeability of the multilayer porous membrane is 50 sec/100 cm$^3$ or more and 250 sec/100 cm$^3$ or less.

8. A separator for a nonaqueous electrolyte solution battery, comprising a multilayer porous membrane according to any one of claims 1 to 7.

9. A nonaqueous electrolyte solution battery, comprising the separator for a nonaqueous electrolyte solution battery according to claim 8, a positive electrode, a negative electrode and a nonaqueous electrolyte solution.

## Patentansprüche

1. Mehrschichtige poröse Membran, umfassend eine poröse Membran, die ein Polyolefinharz als Hauptkomponente umfasst, und eine poröse Schicht, die anorganische Teilchen und ein Bindepolymer umfasst und auf wenigstens eine Seite der porösen Membran geschichtet ist, wobei die Gesamtdicke der porösen Schicht 0,5 $\mu$m oder mehr und 3,0 $\mu$m oder weniger beträgt, die Anzahl der Löcher mit Lochflächen von 0,001 $\mu m^2$ oder mehr in der porösen Schicht 65 oder mehr und 180 oder weniger pro 10 $\mu m^2$ Gesichtsfeld beträgt, der Prozentsatz der Löcher mit Flächen im Bereich von von 0,001 $\mu m^2$ bis 0,05 $\mu m^2$ unter den Löchern mit Flächen von 0,001 $\mu m^2$ oder mehr in der porösen Schicht 90% oder mehr beträgt, der Prozentsatz von anorganischen Teilchen, die die poröse Schicht besetzen, 90 Gew.-% oder mehr und 99 Gew.-% oder weniger beträgt und das Aspektverhältnis der anorganischen Teilchen 1,0 oder mehr und 3,0 oder weniger beträgt.

**2.** Mehrschichtige poröse Membran gemäß Anspruch 1, wobei die Schichtdichte in der porösen Schicht 1,10 g/(m$^2$·$\mu$m) oder mehr und 3,00 g/(m$^2$·$\mu$m) oder weniger beträgt.

**3.** Mehrschichtige poröse Membran gemäß Anspruch 1 oder 2, wobei die mittlere Teilchengröße D$_{50}$ der anorganischen Teilchen in der porösen Schicht 0,10 $\mu$m oder mehr und 0,60 $\mu$m oder weniger beträgt.

**4.** Mehrschichtige poröse Membran gemäß einem der Ansprüche 1 bis 3, wobei die mittlere Teilchengröße D$_{90}$ der anorganischen Teilchen in der porösen Schicht 0,30 $\mu$m oder mehr und 1,20 $\mu$m oder weniger beträgt.

**5.** Mehrschichtige poröse Membran gemäß einem der Ansprüche 1 bis 4, wobei das Verhältnis der Luftdurchlässigkeit der mehrschichtigen porösen Membran zu der Luftdurchlässigkeit der porösen Membran 1,0 oder mehr und 1,6 oder weniger beträgt.

**6.** Mehrschichtige poröse Membran gemäß einem der Ansprüche 1 bis 5, wobei die flächengewichtsäquivalente Durchstechfestigkeit der porösen Membran 60 gf/(g/m$^2$) oder mehr beträgt.

**7.** Mehrschichtige poröse Membran gemäß einem der Ansprüche 1 bis 6, wobei die Luftdurchlässigkeit der mehrschichtigen porösen Membran 50 s/100 cm$^3$ oder mehr und 250 s/100 cm$^3$ oder weniger beträgt.

**8.** Separator für eine Batterie mit nichtwässriger Elektrolytlösung, umfassend eine mehrschichtige poröse Membran gemäß einem der Ansprüche 1 bis 7.

**9.** Batterie mit nichtwässriger Elektrolytlösung, umfassend den Separator für eine Batterie mit nichtwässriger Elektrolytlösung gemäß Anspruch 8, eine positive Elektrode, eine negative Elektrode und eine nichtwässrige Elektrolytlösung.

**Revendications**

**1.** Membrane poreuse multicouche comprenant une membrane poreuse qui inclut une résine de polyoléfine comme un constituant principal, et une couche poreuse qui inclut des particules inorganiques et un polymère de liant, déposée en couche sur au moins un côté de la membrane poreuse, dans laquelle l'épaisseur totale de la couche poreuse est de 0,5 $\mu$m ou supérieure et 3,0 $\mu$m ou inférieure, le nombre de trous avec des surfaces de trous de 0,001 $\mu$m$^2$ ou supérieures dans la couche poreuse est de 65 ou supérieure et 180 ou inférieure par 10 $\mu$m$^2$ de champ visuel, le pourcentage de trous avec des surfaces dans l'intervalle de 0,001 $\mu$m$^2$ à 0,05 $\mu$m$^2$ parmi des trous avec des surfaces de 0,001 $\mu$m$^2$ ou supérieure dans la couche poreuse est de 90 % ou supérieure, le pourcentage de particules inorganiques occupant la couche poreuse est de 90 % en masse ou supérieure et 99 % en masse ou inférieure, et un rapport d'allongement des particules inorganiques est de 1,0 ou supérieur et 3,0 ou inférieur.

**2.** Membrane poreuse multicouche selon la revendication 1, dans laquelle la densité de couche dans la couche poreuse est de 1,10 g/(m$^2$.$\mu$m) ou supérieure et 3,00 g/(m$^2$.$\mu$m) ou inférieure.

**3.** Membrane poreuse multicouche selon la revendication 1 ou 2, dans laquelle la taille moyenne de particules D$_{50}$ des particules inorganiques dans la couche poreuse est de 0,10 $\mu$m ou supérieure et 0,60 $\mu$m ou inférieure.

**4.** Membrane poreuse multicouche selon l'une quelconque des revendications 1 à 3, dans laquelle la taille de particules D$_{90}$ des particules inorganiques dans la couche poreuse est de 0,30 $\mu$m ou supérieure et 1,20 $\mu$m ou inférieure.

**5.** Membrane poreuse multicouche selon l'une quelconque des revendications 1 à 4, dans laquelle le rapport de la perméabilité à l'air de la membrane poreuse multicouche par rapport à la perméabilité à l'air de la membrane poreuse est de 1,0 ou supérieur et 1,6 ou inférieur.

**6.** Membrane poreuse multicouche selon l'une quelconque des revendications 1 à 5, dans laquelle la résistance à la perforation équivalente - masse de base de la membrane poreuse est de 60 gf/(g/m$^2$) ou supérieure.

**7.** Membrane poreuse multicouche selon l'une quelconque des revendications 1 à 6, dans laquelle la perméabilité à l'air de la membrane poreuse multicouche est de 50 s/100 cm$^3$ ou supérieure et 250 s/100 cm$^3$ ou inférieure.

8. Séparateur pour un accumulateur à solution d'électrolyte non aqueuse, comprenant une membrane poreuse multicouche selon l'une quelconque des revendications 1 à 7.

9. Accumulateur à solution d'électrolyte non aqueuse, comprenant le séparateur pour un accumulateur à solution d'électrolyte non aqueuse selon la revendication 8, une électrode positive, une électrode négative et une solution d'électrolyte non aqueuse.

# FIG. 1

Cross-sectional SEM image example

porous layer

Interface
between porous layer
and PO microporous membrane

PO microporous membrane
$(0.1\sim0.2\,\mu\text{m})$

# FIG. 2

Porous layer selection area example

Exclude $0.2\ \mu\text{m}$ height
from the surface

Exclude $0.2\ \mu\text{m}$ height
from the interface

☐ : Selection area of porous layer

# FIG. 3

Visual field area U

$$U = 4.27 \times 2.07 = 8.7768 \, (\mu m^2)$$

4.24x2.07 μm (1280x626); 8-bit; 782K

# FIG. 4

Example of image after Gaussian Blur processing

4.24x2.07 μm (1280x626); 8-bit; 782K

## FIG. 5

Method of determining brightness histogram and threshold in Fig. 4

EP 3 998 155 B1

# FIG. 6

Binarized image
4.24x2.07 µm (1280x626); 8-bit; 782K

# FIG. 7

# FIG. 8

# FIG. 9

# FIG. 10

# FIG. 11

Deadweight

Round bar

Sample

**EP 3 998 155 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010134585 A
- WO 2014148577 A
- JP 2015181110 A
- JP 2016139490 A
- JP 2010015917 A
- WO 2013147071 A
- JP 2013008481 A
- EP 2580270 A1
- EP 2408043 A1
- JP 2019072901 A